# EUROPEAN PATENT SPECIFICATION

(11) **EP 4 383 546 B1**
(45) Date of publication and mention of the grant of the patent: **11.02.2026**
(21) Application number: 23214222.4
(22) Date of filing: 05.12.2023
(51) Int. Cl.: H02M 3/335, B60L 55/00, H02M 3/00, H02M 3/28

(54) **POWER SUPPLY APPARATUS FOR CHARGING PILE**
STROMVERSORGUNGSVORRICHTUNG FÜR LADESÄULE
APPAREIL D'ALIMENTATION ÉLECTRIQUE POUR PILE DE CHARGE

(30) Priority: 05.12.2022 CN 202211546424
(43) Date of publication of application: 12.06.2024
(60) Divisional application: 25213215.4
(73) Proprietor: Huawei Digital Power Technologies Co., Ltd., Shenzhen, 518043 (CN)
(72) Inventor: PAN, Denghai, Shenzhen, 518043 (CN); WU, Shuo, Shenzhen, 518043 (CN); QIU, Yuping, Shenzhen, 518043 (CN)
(74) Representative: Epping - Hermann - Fischer

(56) References cited:
- CN-A- 103 337 961
- CN-A- 110 635 692
- CN-C- 1 043 744
- CN-U- 202 759 382
- CN-Y- 2 443 472
- JP-A- 2013 162 652
- US-A1- 2010 277 960
- US-A1- 2022 149 721
- US-A1- 2022 286 055

## Description

### TECHNICAL FIELD

This application relates to the field of electric vehicle technologies, and in particular, to a power supply apparatus, a three-phase transformer circuit, and a charging pile.

### BACKGROUND

An existing charging pile may charge an electric vehicle through a power grid, and the electric vehicle may discharge power to the power grid or a load through a bidirectional charging pile. Voltage ranges of charging voltages or discharging voltages of various types of electric vehicles are different. Therefore, how the bidirectional charging pile supports the various types of electric vehicles is a technical problem to be resolved.

CN 202 759 382 U discloses a heavy-current high-frequency isolated DC-DC converter, comprising a switch circuit, a resonant circuit, a three-phase transformer and an output rectifying and filtering circuit, wherein a DC input voltage goes through the switch circuit and the resonant circuit firstly, and is converted into a three-phase AC voltage by utilizing a soft-switching technology, then the three-phase AC voltage enters the output rectifying and filtering circuit through the three-phase transformer and is rectified into a single-phase high-frequency voltage, and an output DC voltage is obtained after filtering.

CN 1 043 744 C discloses a three-phase symmetrical tap rectifying arc welder having a steep descent output external characteristic. The present invention is mainly used for manual electric arc weld and is characterized in that three tap are welding transformers with the same parameter replace an integral three-phase transformer. The primary coupling degree of the three transformers can be adjusted by the mode of switching primary taps of the transformers.

CN 2 443 472 Y discloses an energy-saving transformer for oil pumping machines, which is used for the oil production. The document discloses a capacity regulating transformer which is composed of a three-phase primary winding with a middle tap, a three-phase secondary winding, and an iron core, a three-phase dual change-over switch which is used for the capacity regulation to the capacity regulating transformer, and a controlling part which is composed of a controller power supply transformer, a controller, and a driving motor for controlling the change-over switch.

US 2022/149721 Al relates to an on-board charger for a battery of an electric vehicle, comprising an input power interface being connectable to a power source of a charging system; a PFC circuit connected to the input power interface, an isolated DC/DC-converter connected to the PFC circuit, and an output power interface connected to the DC/DC-converter and configured to be connected to the battery of the electric vehicle. The PFC circuit is configured to vary an output voltage in a defined range, the output voltage being provided at an output voltage link of the PFC circuit. The DC/DC-converter comprises a bridge circuit connected to the output voltage link of the PFC circuit, a transformer circuit connected to the bridge circuit, and a rectifier circuit connected to the transformer circuit, wherein the transformer circuit comprises at least a transformer comprising a primary winding connected to the bridge circuit, and a secondary winding connected to the rectifier circuit, wherein at least one of the primary winding and the secondary winding comprises a center-tap dividing the at least one of the primary and the secondary winding into two winding portions, the two winding portions being connected to a switch circuit which is configured to change a turn ratio of the transformer by selectively integrating or excluding one of the two winding portions from the conductive circuit.

US 2022/286055 Al relates to a resonant converter device comprising a selectable primary winding comprising a plurality of circuit legs, the selectable primary winding comprising one or more of a tapped primary winding or a plurality of switchable primary windings. At least one secondary winding coupled to the selectable primary winding to form a resonant transformer. At least one resonant inductor coupled to at least one of the plurality of circuit legs. A plurality of resonant capacitors, each circuit leg comprising at least a respective one of the plurality of resonant capacitors, and at least a second resonant capacitor of the plurality of resonant capacitors coupled within the second circuit leg. And, one or more switching devices connected to the resonant transformer and configured to selectively vary a resonant impedance of the resonant converter device when a voltage inputted to the resonant converter device varies.

### SUMMARY

This application provides a power supply apparatus, a three-phase transformer circuit, and a charging pile. A connection relationship or a turns ratio of at least one of primary-side windings or secondary-side windings in a three-phase transformer may be switched by using a winding switching switch, to extend an output voltage range of the power supply apparatus or the charging pile, and improve conversion efficiency of the power supply apparatus or the charging pile.

According to a first aspect, this application provides a power supply apparatus. The power supply apparatus includes a three-phase transformer and a winding switching switch module. The three-phase transformer includes three primary-side windings and three secondary-side windings. Each of the three primary-side windings is configured to be connected to a primary-side three-phase bridge arm circuit. Each of the three secondary-side windings is configured to be connected to a secondary-side three-phase bridge arm circuit. The winding switching switch module includes a winding connection switching switch group and a winding turn number switching switch group. The winding switching switch module is configured to switch a turns ratio or a connection manner of the three-phase transformer. The winding connection switching switch group is configured to switch a connection manner of the three primary-side windings or a connection manner of the three secondary-side windings. The connection manner of the three primary-side windings or the connection manner of the three secondary-side windings includes a sequential connection or a one-end interconnection. The winding turn number switching switch group is configured to switch turn numbers of the three primary-side windings or turn numbers of the three secondary-side windings. Each of the three primary-side windings or the three secondary-side windings includes a tap. The winding switching switch module is configured to switch at least one of the turns ratio or the connection manner of the three-phase transformer based on at least one of a voltage at two ends of the primary-side three-phase bridge arm circuit or a voltage at two ends of the secondary-side three-phase bridge arm circuit.

A winding switching switch in the power supply apparatus provided in this embodiment of this application may switch a connection relationship or a turns ratio of at least one of the primary-side windings or the secondary-side windings in the three-phase transformer, to extend an output voltage range of the power supply apparatus or a charging pile, and improve conversion efficiency of the power supply apparatus or the charging pile.

In a possible implementation, one end of the three-phase primary -side winding is configured to be connected to each of three bridge arm midpoints of the primary-side three-phase bridge arm circuit, one end of the three-phase secondary-side winding is configured to be connected to each of three bridge arm midpoints of the secondary-side three-phase bridge arm circuit, and the winding connection switching switch group includes at least one of a primary-side winding connection switching switch group or a secondary-side winding connection switching switch. The primary-side winding connection switching switch group is configured to connect the other end of each of the three primary-side windings and a common end of the three primary-side windings, or to sequentially connect the three primary-side windings through the other end of each of the three primary-side windings. The secondary-side winding connection switching switch group is configured to connect the other end of each of the three secondary-side windings and a common end of the three secondary-side windings, or to sequentially connect the three secondary-side windings through the other end of each of the three secondary-side windings.

In a possible implementation, each of the primary-side winding connection switching switch group and the secondary-side winding connection switching switch group includes three winding connection switching switches. Each winding connection switching switch includes a fixed end and two switching ends. The fixed end of each of the three winding connection switching switches is configured to be connected to the other end of each of the three primary-side windings or the other end of each of the three secondary-side windings. One switching end of each of the three winding connection switching switches is configured to be connected to one switching end of each of the other two of the three winding connection switching switches, to form the common end of the three primary-side windings or the common end of the three secondary-side windings. The other switching end of each of the three winding connection switching switches is configured to be connected to one end of each of the three primary-side windings or one end of each of the three secondary-side windings.

In this embodiment of this application, the winding switching switch in the power supply apparatus may switch a connection relationship of at least one of the primary-side windings or the secondary-side windings in the three-phase transformer, to extend the output voltage range of the power supply apparatus or the charging pile, and improve the conversion efficiency of the power supply apparatus or the charging pile.

In a possible implementation, the winding turn number switching switch group includes at least one of a primary-side winding turn number switching switch group or a secondary-side winding turn number switching switch group. The primary-side winding turn number switching switch group is configured to connect the other end of each of the three primary-side windings or the tap of each of the three primary-side windings and a common end of the three primary-side windings, or to sequentially connect the three primary-side windings through the other end of each of the three primary-side windings or the tap of each of the three primary-side windings. The secondary-side winding turn number switching switch group is configured to connect the other end of each of the three secondary-side windings or the tap of each of the three secondary-side windings and a common end of the three secondary-side windings, or to sequentially connect the three secondary-side windings through the other end of each of the three secondary-side windings or the tap of each of the three secondary-side windings.

In a possible implementation, at least one of the primary-side winding turn number switching switch group or the secondary-side winding turn number switching switch group includes three winding turn number switching switches. Each winding turn number switching switch includes a fixed end and two switching ends. Fixed ends of the three winding turn number switching switches are configured to be connected, to form the common end of the three primary-side windings. One switching end of each of the three winding turn number switching switches is configured to be connected to the other end of each of the three primary-side windings or the other end of each of the three secondary-side windings, and the other switching end of each of the three winding turn number switching switches is configured to be connected to the tap of each of the three primary-side windings or the tap of each of the three secondary-side windings.

In this embodiment of this application, the winding switching switch in the power supply apparatus may switch turn numbers of at least one of the primary-side windings or the secondary-side windings in the three-phase transformer, to switch the turns ratio of the three-phase transformer, so as to extend the output voltage range of the power supply apparatus or the charging pile, and improve the conversion efficiency of the power supply apparatus or the charging pile.

In a possible implementation, the winding switching switch module includes at least one of a primary-side winding switching switch module or a secondary-side winding switching switch module. The primary-side winding switching switch module is configured to connect the other end of each of the three primary-side windings or the tap of each of the three primary-side windings and a common end of the three primary-side windings, or to sequentially connect the three primary-side windings through the other end of each of the three primary-side windings or the tap of each of the three primary-side windings. The secondary-side winding switching switch module is configured to connect the other end of each of the three secondary-side windings or the tap of each of the three secondary-side windings and a common end of the three secondary-side windings, or to sequentially connect the three secondary-side windings through the other end of each of the three secondary-side windings or the tap of each of the three secondary-side windings.

In a possible implementation, the primary-side winding switching switch module or the secondary-side winding switching switch module includes three winding connection switching switches and three winding turn number switching switches. Each winding connection switching switch includes a fixed end and two switching ends. Each winding turn number switching switch includes a fixed end and two switching ends. The fixed end of each winding connection switching switch is configured to be connected to the fixed end of each winding turn number switching switch.

One switching end of each of the three winding connection switching switches is configured to be connected to one switching end of each of the other two of the three winding connection switching switches, to form the common end of the three primary-side windings, and the other switching end of each of the three winding connection switching switches is configured to be connected to one end of each of the three primary-side windings. Alternatively, one switching end of each of the three winding connection switching switches is configured to be connected to one switching end of each of the other two of the three winding connection switching switches, to form the common end of the three secondary-side windings, and the other switching end of each of the three winding connection switching switches is configured to be connected to one end of each of the three secondary-side windings.

One switching end of each of the three winding turn number switching switches is configured to be connected to the other end of each of the three primary-side windings, and the other switching end of each of the three winding turn number switching switches is configured to be connected to the tap of each of the three primary-side windings. Alternatively, one switching end of each of the three winding turn number switching switches is configured to be connected to the other end of each of the three secondary-side windings, and the other switching end of each of the three winding turn number switching switches is configured to be connected to the tap of each of the three secondary-side windings.

The winding switching switch in the power supply apparatus provided in this embodiment of this application may switch a connection relationship or a turns ratio of at least one of the primary-side windings or the secondary-side windings in the three-phase transformer, to extend the output voltage range of the power supply apparatus or the charging pile, and improve the conversion efficiency of the power supply apparatus or the charging pile.

In a possible implementation, the winding switching switch module is configured to switch at least one of the turn numbers or the connection manner of the three secondary-side windings in response to a result of comparing the voltage at the two ends of the secondary-side three-phase bridge arm circuit with at least one preset value.

In a possible implementation, the winding switching switch module is configured to: in response to that the voltage at the two ends of the secondary-side three-phase bridge arm circuit is greater than or equal to a first preset value, connect the other end of each of the three secondary-side windings and a common end of the three secondary-side windings. Alternatively, the winding switching switch module is configured to: in response to that the voltage at the two ends of the secondary-side three-phase bridge arm circuit is less than a first preset value, sequentially connect the three secondary-side windings through the other end of each of the three secondary-side windings.

It may be understood that the winding switching switch module in the power supply apparatus provided in this embodiment of this application may switch a connection relationship of the three secondary-side windings based on the voltage at the two ends of the secondary-side three-phase bridge arm circuit. In this way, the power supply apparatus can charge different types of electric vehicles, and the power supply apparatus can supply power by using the different types of electric vehicles, without generating an additional energy loss. This helps improve conversion efficiency.

In a possible implementation, the winding switching switch module is configured to: in response to that the voltage at the two ends of the secondary-side three-phase bridge arm circuit is greater than or equal to a second preset value, connect the other end of each of the three secondary-side windings and a common end of the three secondary-side windings. Alternatively, the winding switching switch module is configured to: in response to that the voltage at the two ends of the secondary-side three-phase bridge arm circuit is less than a second preset value, sequentially connect the three secondary-side windings through the tap of each of the three secondary-side windings.

In a possible implementation, the winding switching switch module is configured to: in response to that the voltage at the two ends of the secondary-side three-phase bridge arm circuit is greater than or equal to a third preset voltage value, connect the other end of each of the three secondary-side windings and a common end of the three secondary-side windings. Alternatively, the winding switching switch module is configured to: in response to that the voltage at the two ends of the secondary-side three-phase bridge arm circuit is less than a fourth preset voltage value and is greater than or equal to a third preset voltage value, connect the tap of each of the three secondary-side windings and a common end of the three secondary-side windings. Alternatively, the winding switching switch module is configured to: in response to that the voltage at the two ends of the secondary-side three-phase bridge arm circuit is less than a third preset voltage value and is greater than or equal to a fifth preset voltage value, sequentially connect the three secondary-side windings through the tap of each of the three secondary-side windings. Alternatively, the winding switching switch module is configured to: in response to that the voltage at the two ends of the secondary-side three-phase bridge arm circuit is less than a fifth preset voltage value, sequentially connect the three secondary-side windings through the other end of each of the three secondary-side windings.

It may be understood that the winding switching switch module in the power supply apparatus provided in this embodiment of this application may switch the turn numbers and the connection manner of the three secondary-side windings based on the voltage at the two ends of the secondary-side three-phase bridge arm circuit. In this way, the power supply apparatus can charge different types of electric vehicles, and the power supply apparatus can supply power by using the different types of electric vehicles, without generating an additional energy loss. This helps improve conversion efficiency.

In a possible implementation, the winding switching switch module is configured to switch at least one of the turn numbers or the connection manner of the three secondary-side windings in response to a result of comparing the voltage at the two ends of the primary-side three-phase bridge arm circuit with at least one preset value.

It may be understood that the winding switching switch module in the power supply apparatus provided in this embodiment of this application may switch the turn numbers and the connection manner of the three secondary-side windings based on the voltage at the two ends of the primary-side three-phase bridge arm circuit. In this way, the power supply apparatus can charge an electric vehicle by using different types of power supplies, and the power supply apparatus can supply power to the different types of power supplies, without generating an additional energy loss. This helps improve conversion efficiency.

According to a second aspect, this application provides a charging pile. The charging pile is configured to charge an electric vehicle or receive power supplied by an electric vehicle. The charging pile includes a previous-stage circuit and a power supply apparatus. The previous-stage circuit is configured to provide a direct current to the power supply apparatus, or is configured to receive power supplied by the power supply apparatus. The power supply apparatus is configured to: receive a direct current, and charge the electric vehicle, or is configured to: receive power supplied by the electric vehicle, and output a direct current to the previous-stage circuit. The power supply apparatus is described according to the first aspect.

According to the charging pile provided in this embodiment of this application, a connection relationship or a turns ratio of windings in the three-phase transformer circuit may be switched by using a winding switching switch, to extend an output voltage range of the charging pile, and improve conversion efficiency of the charging pile.

### BRIEF DESCRIPTION OF DRAWINGS

FIG. 1 is a schematic diagram of a charging pile;
FIG. 2 is a schematic circuit diagram of a power supply apparatus;
FIG. 3 is a schematic diagram of a power supply apparatus according to an embodiment of this application;
FIG. 4 is a schematic circuit diagram of a power supply apparatus according to an example outside of the invention,
FIG. 5 is another schematic circuit diagram of a power supply apparatus according to an example outside of the invention;
FIG. 6 is another schematic circuit diagram of a power supply apparatus according to an embodiment of this application;
FIG. 7 is another schematic circuit diagram of a power supply apparatus according to an embodiment of this application;
FIG. 8 is another schematic circuit diagram of a power supply apparatus according to an embodiment of this application; and
FIG. 9 is another schematic circuit diagram of a power supply apparatus according to an embodiment of this application.

### DESCRIPTION OF EMBODIMENTS

Terms used in implementations of this application are merely used to explain specific embodiments of this application, and are not intended to limit this application.

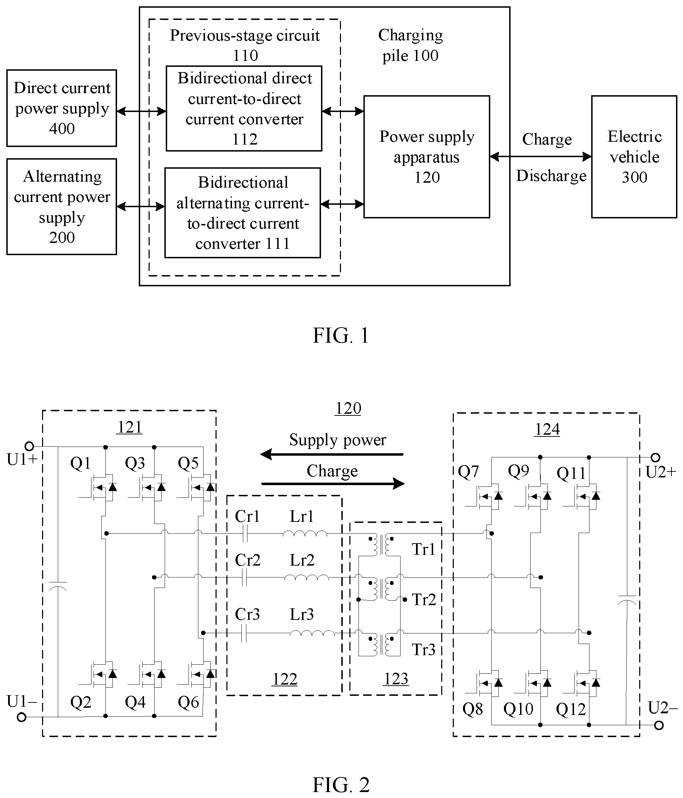

FIG. 1 is a schematic diagram of a charging pile. As shown in FIG. 1, the charging pile 100 includes a previous-stage circuit 110 and a power supply apparatus 120. The charging pile 100 is configured to charge an electric vehicle 300 or receive power supplied by an electric vehicle 300.

For example, the previous-stage circuit 110 is configured to: receive power supplied by an alternating current power supply 200 or a direct current power supply 400, and output a direct current to the power supply apparatus 120. Correspondingly, the power supply apparatus 120 receives power supplied by the previous-stage circuit 110, and charges the electric vehicle 300.

For example, the power supply apparatus 120 receives power supplied by the electric vehicle 300, and outputs a direct current to the previous-stage circuit 110. Correspondingly, the previous-stage circuit 110 is configured to: receive power supplied by the power supply apparatus 120, and supply power to the alternating current power supply 200 or the direct current power supply 400.

For example, the previous-stage circuit 110 includes at least one of a bidirectional alternating current-to-direct current converter 111 or a bidirectional direct current-to-direct current converter 112.

The bidirectional alternating current-to-direct current converter 111 is configured to: receive an alternating current provided by the alternating current power supply 200, and output a direct current to the power supply apparatus 120. Correspondingly, the power supply apparatus 120 receives power supplied by the bidirectional alternating current-to-direct current converter 111, and charges the electric vehicle 300. In addition, the power supply apparatus 120 receives power supplied by the electric vehicle 300, and outputs a direct current to the bidirectional alternating current-to-direct current converter 111. Correspondingly, the bidirectional alternating current-to-direct current converter 111 is configured to: receive power supplied by the power supply apparatus 120, and output an alternating current to the alternating current power supply 200.

The bidirectional direct current-to-direct current converter 112 is configured to: receive a direct current provided by the direct current power supply 400, and output a direct current to the power supply apparatus 120. Correspondingly, the power supply apparatus 120 receives power supplied by the bidirectional direct current-to-direct current converter 112, and charges the electric vehicle 300. In addition, the power supply apparatus 120 receives power supplied by the electric vehicle 300, and outputs a direct current to the bidirectional direct current-to-direct current converter 112. Correspondingly, the bidirectional direct current-to-direct current converter 112 is configured to: receive power supplied by the power supply apparatus 120, and output a direct current to the direct current power supply 400.

FIG. 2 is a schematic circuit diagram of a power supply apparatus. As shown in FIG. 2, the power supply apparatus 120 includes a first bridge arm circuit 121, a three-phase resonant circuit 122, a three-phase transformer 123, and a second bridge arm circuit 124. It may be understood that the first bridge arm circuit 121, the three-phase resonant circuit 122, the three-phase transformer 123, and the second bridge arm circuit 124 form a three-phase resonant converter circuit.

When a charging pile 100 charges an electric vehicle 300, the first bridge arm circuit 121 runs in an inverter mode, and provides a three-phase alternating current to the three-phase transformer 123 through the three-phase resonant circuit 122, and the second bridge arm circuit 124 receives a three-phase alternating current provided by the three-phase transformer 123, and runs in a rectifier mode to output a direct current. Correspondingly, the power supply apparatus 120 may output a direct current to charge the electric vehicle 300.

It may be understood that voltage ranges of charging voltages required by a plurality of types of electric vehicles 300 are different. Therefore, the charging pile 100 needs to provide a wide range of output voltages to meet voltage requirements of the plurality of types of electric vehicles 300. Although output voltage ranges of the power supply apparatus 120 and the charging pile 100 may be adjusted by adjusting a switching frequency when the first bridge arm circuit 121 runs in the inverter mode, conversion efficiency of the power supply apparatus 120 and the charging pile 100 is reduced.

When the charging pile 100 receives power supplied by the electric vehicle 300, the second bridge arm circuit 124 runs in an inverter mode, and provides a three-phase alternating current to the three-phase transformer 123, the three-phase transformer 123 provides a three-phase alternating current to the first bridge arm circuit 121 through the three-phase resonant circuit 122, and the first bridge arm circuit 121 runs in a rectifier mode to output a direct current. Correspondingly, the power supply apparatus 120 outputs a direct current to the previous-stage circuit 110, and the previous-stage circuit 110 outputs an alternating current or a direct current.

However, when the charging pile 100 receives the power supplied by the electric vehicle 300, a ratio of a primary-side voltage to a secondary-side voltage of the three-phase transformer 123 in the power supply apparatus 120 is fixed. When a power supply voltage of the electric vehicle 300 is low, an output voltage of the charging pile 100 is low, and a requirement of the charging pile 100 for supplying power to an alternating current power supply 200 or a direct current power supply 400 cannot be met.

To resolve the foregoing problem, embodiments of the present invention provide a power supply apparatus, a three-phase transformer circuit of a power supply apparatus, and a charging pile. A connection relationship or a turns ratio of windings in the three-phase transformer circuit may be switched by using a winding switching switch, to extend an output voltage range of the power supply apparatus or the charging pile, and improve conversion efficiency of the power supply apparatus or the charging pile.

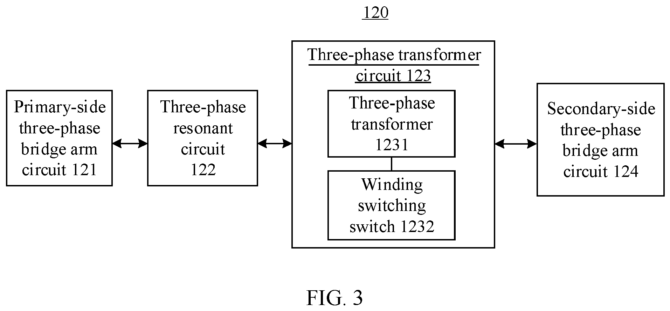

FIG. 3 is a schematic diagram of a power supply apparatus according to an embodiment of this application. As shown in FIG. 3, the power supply apparatus 120 in this embodiment of this application includes a primary-side three-phase bridge arm circuit 121, a three-phase resonant circuit 122, a three-phase transformer circuit 123, and a secondary-side three-phase bridge arm circuit 124.

In this embodiment of this application, the primary-side three-phase bridge arm circuit 121 is configured to receive a direct current provided by a previous-stage circuit 110, and the primary-side three-phase bridge arm circuit 121 runs in an inverter mode. The primary-side three-phase bridge arm circuit 121 outputs a three-phase alternating current to the three-phase transformer circuit 123 through the three-phase resonant circuit 122, and the secondary-side three-phase bridge arm circuit 124 receives a three-phase alternating current provided by the three-phase transformer circuit 123, and runs in a rectifier mode to output a direct current. Correspondingly, the power supply apparatus 120 may output a direct current, and a charging pile 100 charges an electric vehicle 300.

In this embodiment of this application, the secondary-side three-phase bridge arm circuit 124 receives power supplied by the electric vehicle 300, and the secondary-side three-phase bridge arm circuit 124 runs in an inverter mode to output a three-phase alternating current to the three-phase transformer circuit 123. The primary-side three-phase bridge arm circuit 121 is configured to receive, through the three-phase resonant circuit 122, the three-phase alternating current provided by the three-phase transformer circuit 123, and the primary-side three-phase bridge arm circuit 121 runs in a rectifier mode to output a direct current to the previous-stage circuit 110. Correspondingly, the power supply apparatus 120 receives power supplied by the electric vehicle 300, and the charging pile 100 receives power supplied by the electric vehicle 300, and supplies power to an alternating current power supply 200 or a direct current power supply 400.

The three-phase transformer circuit 123 provided in this embodiment of this application includes a three-phase transformer 1231 and a winding switching switch module 1232. A primary-side winding in the three-phase transformer 1231 is configured to be connected to the primary-side three-phase bridge arm circuit 121 through the three-phase resonant circuit 122, and a secondary-side winding in the three-phase transformer 1231 is configured to be connected to the secondary-side three-phase bridge arm circuit 124.

In this embodiment of this application, the winding switching switch module 1232 includes at least one of a winding connection switching switch group or a winding turn number switching switch group. The winding connection switching switch group is configured to switch a connection manner of three primary-side windings or a connection manner of three secondary-side windings. The winding turn number switching switch group is configured to switch turn numbers of the three primary-side windings or turn numbers of the three secondary-side windings.

In this embodiment of this application, the winding connection switching switch group may include at least one of a primary-side winding connection switching switch group or a secondary-side winding connection switching switch group, and the winding turn number switching switch group may include at least one of a primary-side winding turn number switching switch group or a secondary-side winding turn number switching switch group.

In an embodiment, the winding connection switching switch group is configured to switch the connection manner of the three primary-side windings or the connection manner of the three secondary-side windings, and the connection manner of the three primary-side windings or the connection manner of the three secondary-side windings includes a sequential connection or a one-end interconnection.

Specifically, the three primary-side windings are sequentially connected, and the winding connection switching switch group is configured to switch the connection manner of the three primary-side windings. Alternatively, one end of each of the three primary-side windings is connected to one end of each of the other two of the three primary-side windings, and the winding connection switching switch group is configured to switch the connection manner of the three primary-side windings.

Specifically, the three secondary-side windings are sequentially connected, and the winding connection switching switch group is configured to switch the connection manner of the three secondary-side windings. Alternatively, one end of each of the three secondary-side windings is connected to one end of each of the other two of the three secondary-side windings, and the winding connection switching switch group is configured to switch the connection manner of the three secondary-side windings.

In an embodiment, the winding turn number switching switch group is configured to switch the turn numbers of the three primary-side windings or the turn numbers of the three secondary-side windings, and each of the three primary-side windings or the three secondary-side windings includes a tap. Specifically, each of the three primary-side windings includes a tap, and the winding turn number switching switch group is configured to switch the turn numbers of the three primary-side windings. Alternatively, each of the three secondary-side windings includes a tap, and the winding connection switching switch group is configured to switch the turn numbers of the three secondary-side windings.

In this embodiment of this application, the winding switching switch module 1232 is configured to switch a turns ratio of the three-phase transformer 1231 based on a voltage at two ends of the primary-side three-phase bridge arm circuit 121 or a voltage at two ends of the secondary-side three-phase bridge arm circuit 124, to extend an output voltage range of the power supply apparatus or the charging pile, and improve conversion efficiency of the power supply apparatus or the charging pile.

The winding switching switch module 1232 in the three-phase transformer circuit 123 provided in this embodiment of this application may switch a connection manner or turn numbers of the primary-side windings or the secondary-side windings in the three-phase transformer 1231, to switch a ratio of a primary-side voltage to a secondary-side voltage of the three-phase transformer 1231, extend the output voltage range of the power supply apparatus or the charging pile, and improve the conversion efficiency of the power supply apparatus or the charging pile.

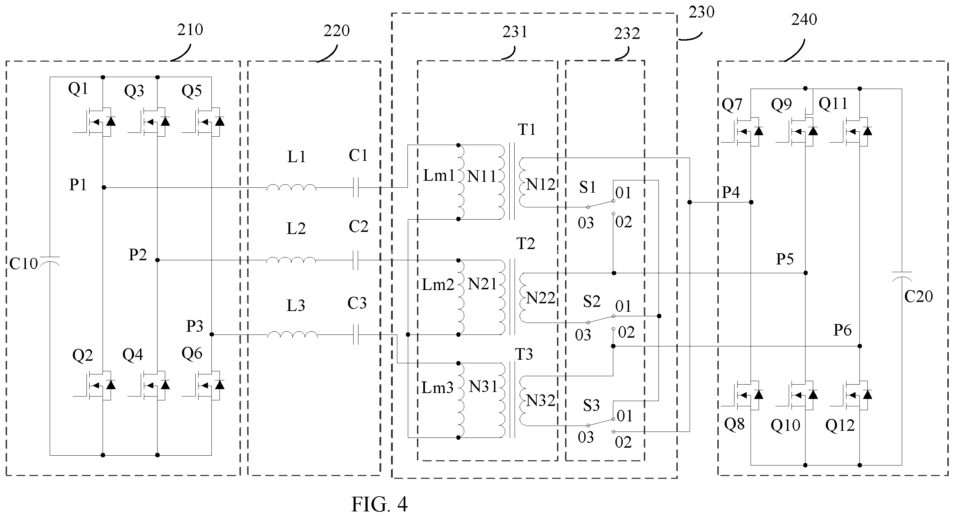

FIG. 4 is a schematic circuit diagram of a power supply apparatus according to an example outside of the invention. As shown in FIG. 4, the power supply apparatus 120 includes a three-phase transformer circuit 230 . The three-phase transformer circuit 230 provided in this example includes a three-phase transformer 231 and a winding switching switch module 232.

For example, the three-phase transformer 231 includes three primary-side windings (N11, N21, and N31) and three secondary-side windings (N12, N22, and N32). The three primary-side windings (N11, N21, and N31) and the three secondary-side windings (N12, N22, and N32) respectively transmit a three-phase alternating current through three magnetic core couplings (T1, T2, and T3). Each of the three primary-side windings (N11, N21, and N31) is configured to be connected to a primary-side three-phase bridge arm circuit 210 through a three-phase resonant circuit 220, and each of the three secondary-side windings (N12, N22, and N32) is configured to be connected to a secondary-side three-phase bridge arm circuit 240.

Specifically, the primary-side three-phase bridge arm circuit 210 includes a capacitor C10 and three bridge arms connected in parallel. Each bridge arm includes two switching transistors. One end of one switching transistor is connected to the other end of the other switching transistor, a connection point between the two switching transistors is used as a bridge arm midpoint, and the other end of the one switching transistor and one end of the other switching transistor are respectively used as two ends of the bridge arm. Two ends of each of the three bridge arms are connected to two ends of each of the other two of the three bridge arms to serve as two ends of the primary-side three-phase bridge arm circuit 210, and two ends of the capacitor C10 are respectively connected to the two ends of the primary-side three-phase bridge arm circuit 210.

For example, the three bridge arms connected in parallel in the primary-side three-phase bridge arm circuit 210 are a first bridge arm, a second bridge arm, and a third bridge arm. The first bridge arm includes a switching transistor Q1 and a switching transistor Q2. One end of the switching transistor Q1 is connected to the other end of the switching transistor Q2, a connection point between the switching transistor Q1 and the switching transistor Q2 is used as a bridge arm midpoint P1 of the first bridge arm, and the other end of the switching transistor Q1 and one end of the switching transistor Q2 are respectively used as two ends of the first bridge arm. The second bridge arm includes a switching transistor Q3 and a switching transistor Q4. One end of the switching transistor Q3 is connected to the other end of the switching transistor Q4, a connection point between the switching transistor Q3 and the switching transistor Q4 is used as a bridge arm midpoint P2 of the second bridge arm, and the other end of the switching transistor Q3 and one end of the switching transistor Q4 are respectively used as two ends of the second bridge arm. The third bridge arm includes a switching transistor Q5 and a switching transistor Q6. One end of the switching transistor Q5 is connected to the other end of the switching transistor Q6, a connection point between the switching transistor Q5 and the switching transistor Q6 is used as a bridge arm midpoint P3 of the third bridge arm, and the other end of the switching transistor Q5 and one end of the switching transistor Q6 are respectively used as two ends of the third bridge arm.

Specifically, the secondary-side three-phase bridge arm circuit 240 includes a capacitor C20 and three bridge arms connected in parallel. Each bridge arm includes two switching transistors. One end of one switching transistor is connected to the other end of the other switching transistor, a connection point between the two switching transistors is used as a bridge arm midpoint of the bridge arm, and the other end of the one switching transistor and one end of the other switching transistor are respectively used as two ends of the bridge arm. Two ends of each of the three bridge arms are connected to two ends of each of the other two of the three bridge arms to serve as two ends of the secondary-side three-phase bridge arm circuit 240, and two ends of the capacitor C20 are respectively connected to the two ends of the secondary-side three-phase bridge arm circuit 240.

For example, the three bridge arms connected in parallel in the secondary-side three-phase bridge arm circuit 240 are a fourth bridge arm, a fifth bridge arm, and a sixth bridge arm. The fourth bridge arm includes a switching transistor Q7 and a switching transistor Q8. One end of the switching transistor Q7 is connected to the other end of the switching transistor Q8, a connection point between the switching transistor Q7 and the switching transistor Q8 is used as a bridge arm midpoint P4 of the fourth bridge arm, and the other end of the switching transistor Q7 and one end of the switching transistor Q8 are respectively used as two ends of the fourth bridge arm. The fifth bridge arm includes a switching transistor Q9 and a switching transistor Q10. One end of the switching transistor Q9 is connected to the other end of the switching transistor Q10, a connection point between the switching transistor Q9 and the switching transistor Q10 is used as a bridge arm midpoint P5 of the fifth bridge arm, and the other end of the switching transistor Q9 and one end of the switching transistor Q10 are respectively used as two ends of the fifth bridge arm. The sixth bridge arm includes a switching transistor Q11 and a switching transistor Q12. One end of the switching transistor Q11 is connected to the other end of the switching transistor Q12, a connection point between the switching transistor Q11 and the switching transistor Q12 is used as a bridge arm midpoint P6 of the sixth bridge arm, and the other end of the switching transistor Q11 and one end of the switching transistor Q12 are respectively used as two ends of the sixth bridge arm.

In this embodiment of this application, one end of each of the three primary-side windings (N11, N21, and N31) in the three-phase transformer 231 is configured to be connected to each of the three bridge arm midpoints (P1, P2, and P3) of the primary-side three-phase bridge arm circuit 210 through the three-phase resonant circuit 220.

In an embodiment, two ends of each of the three primary-side windings (N11, N21, and N31) in the three-phase transformer 231 are respectively connected to two ends of each of three inductors (Lm1, Lm2, and Lm3). For example, two ends of the primary-side winding N11 are respectively connected to two ends of the inductor Lm1, two ends of the primary-side winding N21 are respectively connected to two ends of the inductor Lm2, and two ends of the primary-side winding N31 are respectively connected to two ends of the inductor Lm3.

In this embodiment of this application, each phase of resonant circuit in the three-phase resonant circuit 220 includes an inductor and a capacitor that are connected in series. For example, the three-phase resonant circuit 220 includes a first-phase resonant circuit, a second-phase resonant circuit, and a third-phase resonant circuit. The first-phase resonant circuit includes an inductor L1 and a capacitor C1 that are connected in series. The second-phase resonant circuit includes an inductor L2 and a capacitor C2 that are connected in series. The third-phase resonant circuit includes an inductor L3 and a capacitor C3 that are connected in series.

In this embodiment of this application, one end of each of the three secondary-side windings (N12, N22, and N32) is configured to be connected to each of the three bridge arm midpoints (P4, P5, and P6) of the secondary-side three-phase bridge arm circuit 240. Specifically, one end of the secondary-side winding N12 is configured to be connected to the bridge arm midpoint P4 of the secondary-side three-phase bridge arm circuit 240, one end of the secondary-side winding N22 is configured to be connected to the bridge arm midpoint P5 of the secondary-side three-phase bridge arm circuit 240, and one end of the secondary-side winding N32 is configured to be connected to the bridge arm midpoint P6 of the secondary-side three-phase bridge arm circuit 240.

In this embodiment of this application, the winding connection switching switch group includes three winding connection switching switches. Each winding connection switching switch includes a fixed end and two switching ends. The fixed end of each of the three winding connection switching switches is configured to be connected to the other end of each of the three primary-side windings or the other end of each of the three secondary-side windings. One switching end of each of the three winding connection switching switches is configured to be connected to one switching end of each of the other two of the three winding connection switching switches, to form a common end of the three primary-side windings or a common end of the three secondary-side windings, and the other switching end of each of the three winding connection switching switches is configured to be connected to the one end of each of the three primary-side windings or the one end of each of the three secondary-side windings.

In this embodiment of this application, a winding connection switching switch group configured to switch a connection relationship of the three secondary-side windings is also referred to as a secondary-side winding connection switching switch group.

In an embodiment, the other end of each of the three primary-side windings (N11, N21, and N31) in the three-phase transformer 231 shown in FIG. 4 is connected to the other end of each of the other two of the three primary-side windings. The winding switching switch module 232 includes a winding connection switching switch group. The winding connection switching switch group is configured to switch the connection relationship of the three secondary-side windings (N12, N22, and N32). In this example, the winding connection switching switch group configured to switch the connection relationship of the three secondary-side windings is also referred to as a secondary-side winding connection switching switch group.

For example, the winding connection switching switch group includes three winding connection switching switches (S1, S2, and S3). Each winding connection switching switch (S1, S2, and S3) includes two switching ends (01 and 02) and a fixed end 03. Each of a fixed end 03 of the winding connection switching switch S1, a fixed end 03 of the winding connection switching switch S2, and a fixed end 03 of the winding connection switching switch S3 is configured to be connected to the other end of each of the three secondary-side windings (N12, N22, and N32). A switching end 01 of the winding connection switching switch S1, a switching end 01 of the winding connection switching switch S2, and a switching end 01 of the winding connection switching switch S3 are configured to be connected, to form the common end of the three secondary-side windings (N12, N22, and N32). A switching end 02 of the winding connection switching switch S1 is configured to be connected to one end of the secondary-side winding N22. A switching end 02 of the winding connection switching switch S2 is configured to be connected to one end of the secondary-side winding N32. A switching end 02 of the winding connection switching switch S3 is configured to be connected to one end of the secondary-side winding N12.

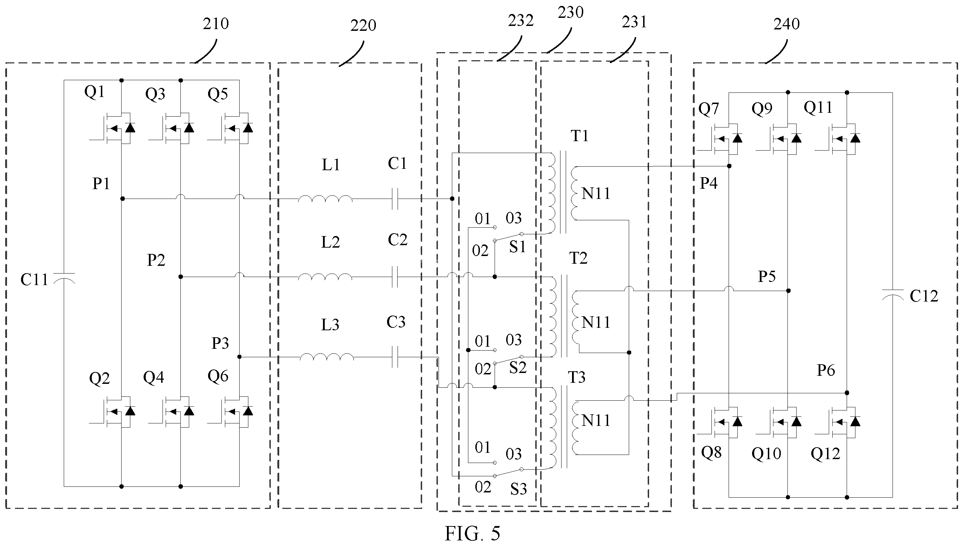

FIG. 5 is another schematic diagram of a power supply apparatus according to a second example outside of the invention. A primary-side three-phase bridge arm circuit 210, a three-phase resonant circuit 220, and a secondary-side three-phase bridge arm circuit 240 shown in FIG. 5 are the same as those shown in FIG. 4. Details are not described herein.

The other end of each of three secondary-side windings (N12, N22, and N32) in a three-phase transformer 231 shown in FIG. 5 is connected to the other end of each of the other two of the three secondary-side windings. A winding switching switch module 232 includes a winding connection switching switch group. The winding connection switching switch group is configured to switch a connection relationship of three primary-side windings (N11, N21, and N31). In this second example outside of the invention, the winding connection switching switch group configured to switch the connection relationship of the three primary-side windings is also referred to as a primary-side winding connection switching switch group.

For example, the winding connection switching switch group includes three winding connection switching switches (S1, S2, and S3). Each winding connection switching switch (S1, S2, and S3) includes two switching ends (01 and 02) and a fixed end 03. Each of a fixed end 03 of the winding connection switching switch S1, a fixed end 03 of the winding connection switching switch S2, and a fixed end 03 of the winding connection switching switch S3 is configured to be connected to the other end of each of the three primary-side windings (N11, N21, and N31). A switching end 01 of the winding connection switching switch S1, a switching end 01 of the winding connection switching switch S2, and a switching end 01 of the winding connection switching switch S3 are configured to be connected, to form a common end of the three primary-side windings (N11, N21, and N31). A switching end 02 of the winding connection switching switch S1 is configured to be connected to one end of the primary-side winding N21. A switching end 02 of the winding connection switching switch S2 is configured to be connected to one end of the primary-side winding N31. A switching end 02 of the winding connection switching switch S3 is configured to be connected to one end of the primary-side winding N11.

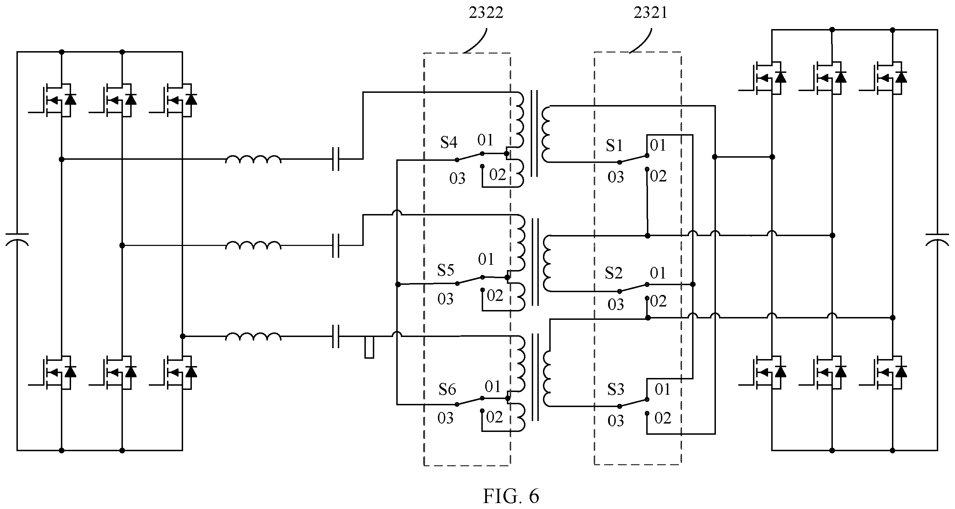

FIG. 6 is a schematic diagram of a power supply apparatus according to an embodiment of this application. A primary-side three-phase bridge arm circuit 210, a three-phase resonant circuit 220, and a secondary-side three-phase bridge arm circuit 240 shown in FIG. 6 are the same as those shown in FIG. 4. Details are not described herein. As shown in FIG. 6, a winding switching switch module 232 includes a winding connection switching switch group 2321 and a winding turn number switching switch group 2322.

The winding connection switching switch group 2321 shown in FIG. 6 is the same as the winding connection switching switch group in the winding switching switch module 232 shown in FIG. 4. Details are not described herein.

As shown in FIG. 6, each of three primary-side windings (N11, N21, and N31) in a three-phase transformer 231 includes two ends and a tap. The winding turn number switching switch group 2322 is configured to switch turn numbers of the three primary-side windings (N11, N21, and N31). In this embodiment of this application, the winding turn number switching switch group configured to switch the turn numbers of the three primary-side windings is also referred to as a primary-side winding turn number switching switch group.

For example, the winding turn number switching switch group 2322 includes three winding turn number switching switches (S4, S5, and S6). Each winding connection switching switch (S4, S5, and S6) includes two switching ends (01 and 02) and a fixed end 03. A fixed end 03 of the winding turn number switching switch S4, a fixed end 03 of the winding turn number switching switch S5, and a fixed end 03 of the winding turn number switching switch S6 are configured to be connected, to form a common end of the three primary-side windings (N11, N21, and N31). Each of a switching end 01 of the winding turn number switching switch S4, a switching end 01 of the winding turn number switching switch S5, and a switching end 01 of the winding connection switching switch S6 is configured to be connected to the tap of each of the three primary-side windings (N11, N21, and N31). Each of a switching end 02 of the winding turn number switching switch S4, a switching end 02 of the winding turn number switching switch S5, and a switching end 02 of the winding connection switching switch S6 is configured to be connected to the other end of each of the three primary-side windings (N11, N21, and N31).

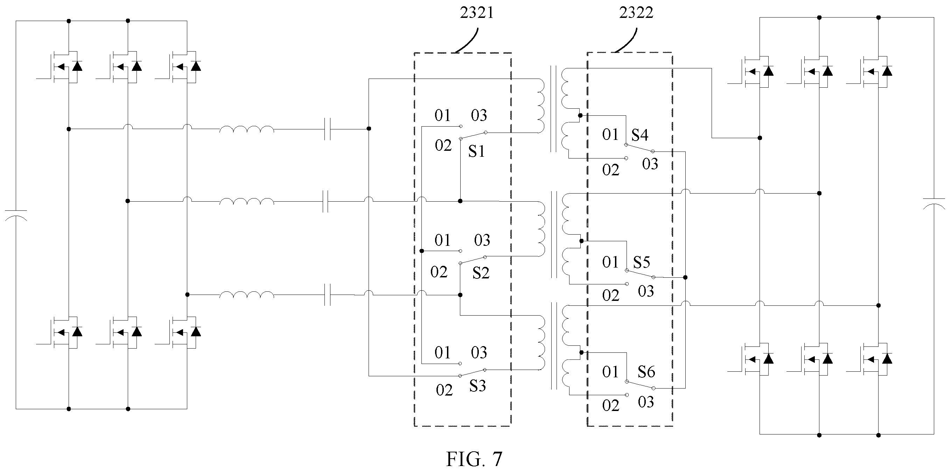

FIG. 7 is another schematic diagram of a power supply apparatus according to an embodiment of this application. A primary-side three-phase bridge arm circuit 210, a three-phase resonant circuit 220, and a secondary-side three-phase bridge arm circuit 240 shown in FIG. 7 are the same as those shown in FIG. 4. Details are not described herein. As shown in FIG. 7, a winding switching switch module 232 includes a winding connection switching switch group 2321 and a winding turn number switching switch group 2322.

The winding connection switching switch group 2321 shown in FIG. 7 is the same as the winding connection switching switch group in the winding switching switch module 232 shown in FIG. 5. Details are not described herein.

As shown in FIG. 7, each of three secondary-side windings (N12, N22, and N32) in a three-phase transformer 231 includes two ends and a tap. The winding turn number switching switch group 2322 is configured to switch turn numbers of the three secondary-side windings (N12, N22, and N32). In this embodiment of this application, the winding turn number switching switch group configured to switch the turn numbers of the three secondary-side windings is also referred to as a secondary-side winding turn number switching switch group.

For example, the winding turn number switching switch group 2322 includes three winding turn number switching switches (S4, S5, and S6). Each winding connection switching switch (S4, S5, and S6) includes two switching ends (01 and 02) and a fixed end 03. A fixed end 03 of the winding turn number switching switch S4, a fixed end 03 of the winding turn number switching switch S5, and a fixed end 03 of the winding turn number switching switch S6 are configured to be connected, to form a common end of the three secondary-side windings (N12, N22, and N32). Each of a switching end 01 of the winding turn number switching switch S4, a switching end 01 of the winding turn number switching switch S5, and a switching end 01 of the winding connection switching switch S6 is configured to be connected to the tap of each of the three secondary-side windings (N12, N22, and N32). Each of a switching end 02 of the winding turn number switching switch S4, a switching end 02 of the winding turn number switching switch S5, and a switching end 02 of the winding connection switching switch S6 is configured to be connected to the other end of each of the three secondary-side windings (N12, N22, and N32).

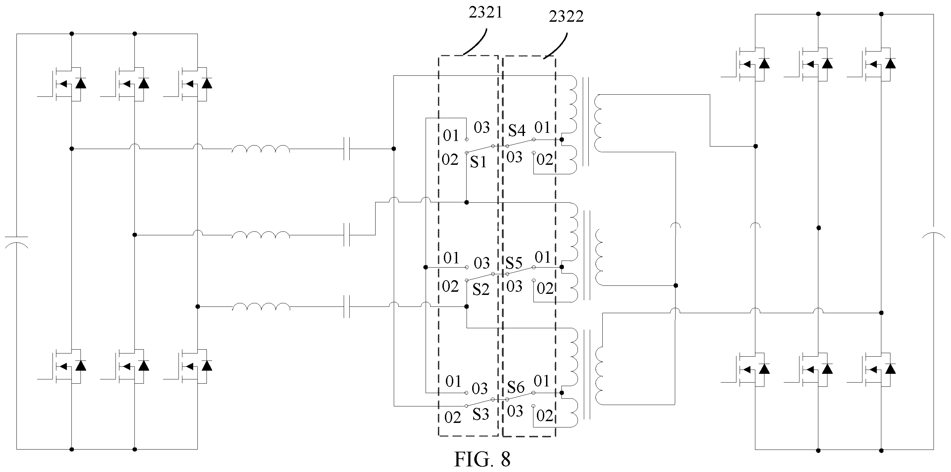

FIG. 8 is another schematic diagram of a power supply apparatus according to an embodiment of this application. A primary-side three-phase bridge arm circuit 210, a three-phase resonant circuit 220, and a secondary-side three-phase bridge arm circuit 240 shown in FIG. 8 are the same as those shown in FIG. 4. Details are not described herein.

As shown in FIG. 8, a winding switching switch module 232 includes a winding connection switching switch group 2321 and a winding turn number switching switch group 2322. Each of three primary-side windings (N11, N21, and N31) in a three-phase transformer 231 includes two ends and a tap. The winding connection switching switch group 2321 is configured to switch a connection relationship of the three primary-side windings (N11, N21, and N31). The winding turn number switching switch group 2322 is configured to switch turn numbers of the three primary-side windings (N11, N21, and N31).

For example, the winding connection switching switch group 2321 includes three winding connection switching switches (S1, S2, and S3), and each winding connection switching switch (S1, S2, and S3) includes two switching ends (01 and 02) and a fixed end 03; and the winding turn number switching switch group 2322 includes three winding turn number switching switches (S4, S5, and S6), and each winding connection switching switch (S4, S5, and S6) includes two switching ends (01 and 02) and a fixed end 03.

Fixed ends 03 of the three winding connection switching switches (S1, S2, and S3) are respectively configured to be connected to fixed ends 03 of the three winding turn number switching switches (S4, S5, and S6). Specifically, the fixed end 03 of the winding connection switching switch S1 is configured to be connected to the fixed end 03 of the winding turn number switching switch S4, the fixed end 03 of the winding connection switching switch S2 is configured to be connected to the fixed end 03 of the winding turn number switching switch S5, and the fixed end 03 of the winding connection switching switch S3 is configured to be connected to the fixed end 03 of the winding turn number switching switch S6.

Switching ends 01 of the three winding connection switching switches (S1, S2, and S3) are configured to be connected, to form a common end of the three primary-side windings (N11, N21, and N31). Specifically, the switching end 01 of the winding connection switching switch S1, the switching end 01 of the winding connection switching switch S2, and the switching end 01 of the winding connection switching switch S3 are configured to be connected, to form the common end of the three primary-side windings (N11, N21, and N31).

A switching end 02 of each of the three winding connection switching switches (S1, S2, and S3) is configured to be connected to one end of each of the three primary-side windings (N11, N21, and N31) in sequence. Specifically, a switching end 02 of the winding connection switching switch S1 is configured to be connected to one end of the primary-side winding N21, a switching end 02 of the winding connection switching switch S2 is configured to be connected to one end of the primary-side winding N31, and a switching end 02 of the winding connection switching switch S3 is configured to be connected to one end of the primary-side winding N11.

A switching end 01 of each of the three winding turn number switching switches (S4, S5, and S6) is configured to be connected to the tap of each of the three primary-side windings (N11, N21, and N31). Specifically, a switching end 01 of the winding turn number switching switch S4 is configured to be connected to a tap of the primary-side winding N11, a switching end 01 of the winding turn number switching switch S5 is configured to be connected to a tap of the primary-side winding N21, and a switching end 01 of the winding turn number switching switch S6 is configured to be connected to a tap of the primary-side winding N31.

A switching end 02 of each of the three winding turn number switching switches (S4, S5, and S6) is configured to be connected to the other end of each of the three primary-side windings (N11, N21, and N31). Specifically, a switching end 02 of the winding turn number switching switch S4 is configured to be connected to the other end of the primary-side winding N11, a switching end 02 of the winding turn number switching switch S5 is configured to be connected to the other end of the primary-side winding N21, and a switching end 02 of the winding turn number switching switch S6 is configured to be connected to the other end of the primary-side winding N31.

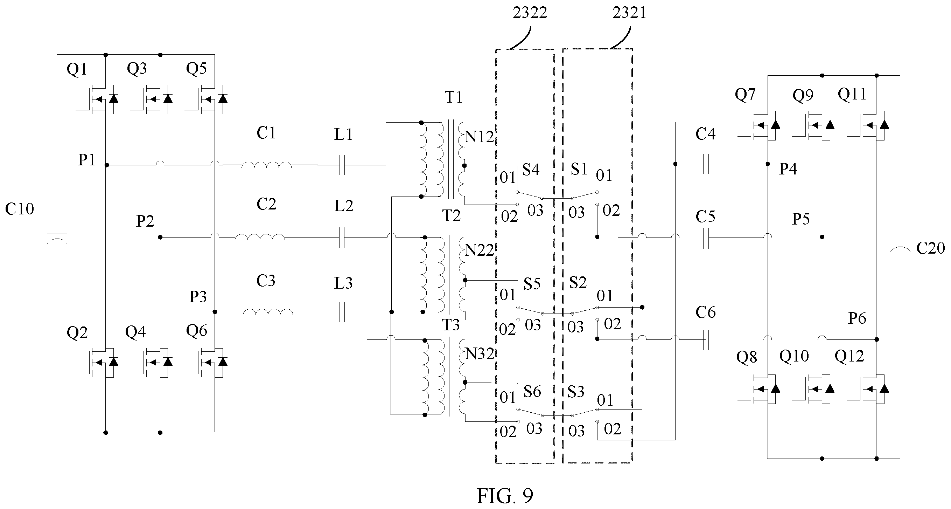

As shown in FIG. 9, a winding switching switch module 232 includes a winding connection switching switch group 2321 and a winding turn number switching switch group 2322. Each of three secondary-side windings (N12, N22, and N32) in a three-phase transformer 231 includes two ends and a tap. The winding connection switching switch group 2321 is configured to switch a connection relationship of the three secondary-side windings (N12, N22, and N32). The winding turn number switching switch group 2322 is configured to switch turn numbers of the three secondary-side windings (N12, N22, and N32).

For example, the winding connection switching switch group 2321 includes three winding connection switching switches (S1, S2, and S3), and each winding connection switching switch (S1, S2, and S3) includes two switching ends (01 and 02) and a fixed end 03; and the winding turn number switching switch group 2322 includes three winding turn number switching switches (S4, S5, and S6), and each winding connection switching switch (S4, S5, and S6) includes two switching ends (01 and 02) and a fixed end 03.

Fixed ends 03 of the three winding connection switching switches (S1, S2, and S3) are respectively configured to be connected to fixed ends 03 of the three winding turn number switching switches (S4, S5, and S6). Specifically, the fixed end 03 of the winding connection switching switch S1 is configured to be connected to the fixed end 03 of the winding turn number switching switch S4, the fixed end 03 of the winding connection switching switch S2 is configured to be connected to the fixed end 03 of the winding turn number switching switch S5, and the fixed end 03 of the winding connection switching switch S3 is configured to be connected to the fixed end 03 of the winding turn number switching switch S6.

Switching ends 01 of the three winding connection switching switches (S1, S2, and S3) are configured to be connected, to form a common end of the three secondary-side windings (N12, N22, and N32). Specifically, the switching end 01 of the winding connection switching switch S1, the switching end 01 of the winding connection switching switch S2, and the switching end 01 of the winding connection switching switch S3 are configured to be connected, to form the common end of the three secondary-side windings (N12, N22, and N32).

A switching end 02 of each of the three winding connection switching switches (S1, S2, and S3) is configured to be connected to one end of each of the three secondary-side windings (N12, N22, and N32) in sequence. Specifically, a switching end 02 of the winding connection switching switch S1 is configured to be connected to one end of the secondary-side winding N22, a switching end 02 of the winding connection switching switch S2 is configured to be connected to one end of the primary-side winding N32, and a switching end 02 of the winding connection switching switch S3 is configured to be connected to one end of the primary-side winding N12.

A switching end 01 of each of the three winding turn number switching switches (S4, S5, and S6) is configured to be connected to the tap of each of the three secondary-side windings (N12, N22, and N32). Specifically, a switching end 01 of the winding turn number switching switch S4 is configured to be connected to a tap of the secondary-side winding N12, a switching end 01 of the winding turn number switching switch S5 is configured to be connected to a tap of the secondary-side winding N22, and a switching end 01 of the winding turn number switching switch S6 is configured to be connected to a tap of the secondary-side winding N32.

A switching end 02 of each of the three winding turn number switching switches (S4, S5, and S6) is configured to be connected to the other end of each of the three secondary-side windings (N12, N22, and N32). Specifically, a switching end 02 of the winding turn number switching switch S4 is configured to be connected to the other end of the secondary-side winding N12, a switching end 02 of the winding turn number switching switch S5 is configured to be connected to the other end of the secondary-side winding N22, and a switching end 02 of the winding turn number switching switch S6 is configured to be connected to the other end of the secondary-side winding N32.

In an embodiment, the one end of each of the three secondary-side windings (N12, N22, and N32) in the three-phase transformer 231 is connected to each of the three bridge arm midpoints (P4, P5, and P6) of the secondary-side three-phase bridge arm circuit 240 through each of three capacitors. Specifically, the one end of the secondary-side winding N12 is connected to the bridge arm midpoint P4 through a capacitor C4, the one end of the secondary-side winding N22 is connected to the bridge arm midpoint P5 through a capacitor C5, and the one end of the secondary -side winding N32 is connected to the bridge arm midpoint P6 through a capacitor C6.

It may be understood that the winding switching switch module 232 in the three-phase transformer circuit 230 provided in this embodiment of this application may alternatively be disposed in both the primary-side winding and the secondary-side winding in the three-phase transformer 231. In this embodiment of this application, the winding switching switch module 232 disposed in the primary-side winding in the three-phase transformer 231 may also be referred to as a primary-side winding switching switch module, and the winding switching switch module 232 disposed in the secondary-side winding in the three-phase transformer 231 may also be referred to as a secondary-side winding switching switch module. For a circuit connection relationship of the primary-side winding switching switch module, refer to FIG. 8. For a circuit connection relationship of the secondary-side winding switching switch module, refer to FIG. 9. Details are not described herein.

The winding switching switch module in the three-phase transformer circuit provided in this embodiment of this application may switch a turns ratio or a connection manner of the three-phase transformer based on a voltage at two ends of the primary-side three-phase bridge arm circuit or a voltage at two ends of the secondary-side three-phase bridge arm circuit.

In an embodiment, the winding switching switch module 232 shown in FIG. 4 includes a secondary-side winding connection switching switch group. The secondary-side winding connection switching switch group is configured to switch the connection relationship of the three secondary-side windings in the three-phase transformer 231 in response to a result of comparing the voltage at the two ends of the secondary-side three-phase bridge arm circuit 240 with at least one preset value.

Specifically, in response to that the voltage at the two ends of the secondary-side three-phase bridge arm circuit 240 is greater than or equal to a first preset voltage value, a fixed end S03 and a switching end S01 of the secondary-side winding connection switching switch group are connected, and the other end of each of the three secondary-side windings in the three-phase transformer 231 is connected to the other end of each of the other two of the three secondary-side windings. That is, a connection manner of the secondary-side windings in the three-phase transformer 231 is a star connection or a Y-shaped connection.

Specifically, in response to that the voltage at the two ends of the secondary-side three-phase bridge arm circuit 240 is less than a first preset voltage value, a fixed end S03 and a switching end S02 of the secondary-side winding connection switching switch group are connected, and the three secondary-side windings in the three-phase transformer 231 are sequentially connected. That is, a connection manner of the secondary-side windings in the three-phase transformer 231 is a delta connection.

It may be understood that when the connection manner of the secondary-side windings in the three-phase transformer 231 is a star connection or a Y-shaped connection, a maximum voltage of the secondary-side winding in the three-phase transformer 231 is two-thirds of the voltage at the two ends of the secondary-side three-phase bridge arm circuit 240; or when the connection manner of the secondary-side windings in the three-phase transformer 231 is a delta connection, a maximum voltage of the secondary-side winding in the three-phase transformer 231 is equal to the voltage at the two ends of the secondary-side three-phase bridge arm circuit 240.

In response to that the voltage at the two ends of the secondary-side three-phase bridge arm circuit 240 is greater than or equal to the first preset voltage value, the fixed end S03 and the switching end S01 of the secondary-side winding connection switching switch group are connected. For example, the first preset voltage value is 700 volts. Correspondingly, a voltage requirement greater than or equal to 700 volts is a high voltage requirement, for example, 700 volts, 800 volts, or even 1000 volts.

Specifically, when the power supply apparatus 120 in the charging pile 100 is configured to charge the electric vehicle 300 with a high voltage requirement, the voltage at the two ends of the secondary-side three-phase bridge arm circuit 240 may be increased to 1.5 times a theoretical voltage value of the secondary-side winding in the three-phase transformer 231. Therefore, the charging pile 100 or the power supply apparatus 120 can meet the high voltage requirement of the electric vehicle 300, so that different types of electric vehicles 300 can be charged.

Specifically, when the power supply apparatus 120 in the charging pile 100 is configured to receive power supplied by the electric vehicle 300 with a high voltage requirement, a voltage of the secondary-side winding in the three-phase transformer 231 may be decreased to two-thirds of the voltage at the two ends of the secondary-side three-phase bridge arm circuit 240. Therefore, the charging pile 100 or the power supply apparatus 120 can meet a requirement that the voltage at the two ends of the primary-side three-phase bridge arm circuit is constant (for example, 650 volts), so that power can be supplied to the alternating current power supply 200 or the direct current power supply by using different types of electric vehicles 300.

In response to that the voltage at the two ends of the secondary-side three-phase bridge arm circuit 240 is less than the first preset voltage value, the fixed end S03 and the switching end S02 of the secondary-side winding connection switching switch group are connected. Correspondingly, a voltage requirement less than 700 volts is a low voltage requirement, for example, 300 volts, 400 volts, or even 500 volts.

Specifically, when the power supply apparatus 120 in the charging pile 100 is configured to charge the electric vehicle 300 with a low voltage requirement or receive power supplied by the electric vehicle 300 with a low voltage requirement, the maximum voltage of the secondary -side winding in the three-phase transformer 231 is equal to the voltage at the two ends of the secondary-side three-phase bridge arm circuit 240. A voltage that is at each of the two ends of the secondary-side three-phase bridge arm circuit 240 and that exists when the secondary-side windings in the three-phase transformer 231 are in a star connection is half of a voltage that is at each of the two ends of the secondary-side three-phase bridge arm circuit 240 and that exists when the secondary-side windings in the three-phase transformer 231 are in a delta connection. Correspondingly, the charging pile 100 or the power supply apparatus 120 can not only charge different types of electric vehicles 300, but also supply power to the alternating current power supply 200 or the direct current power supply by using the different types of electric vehicles 300, without generating an additional energy loss. This helps improve conversion efficiency.

It may be understood that the three-phase transformer circuit 230 provided in this embodiment of this application may switch the connection relationship of the three secondary-side windings based on the voltage at the two ends of the secondary-side three-phase bridge arm circuit. In this way, the power supply apparatus 120 and the charging pile 100 can charge different types of electric vehicles 300, and the power supply apparatus 120 and the charging pile 100 can supply power to different types of alternating current power supplies 200 or direct current power supplies by using the different types of electric vehicles 300, without generating an additional energy loss. This helps improve conversion efficiency.

In an embodiment, the secondary-side winding connection switching switch group is configured to switch the connection relationship of the three secondary-side windings in the three-phase transformer 231 in response to a result of comparing the voltage at the two ends of the primary-side three-phase bridge arm circuit 210 with at least one preset value. For example, the direct current power supply 400 may be an energy storage device. Voltage ranges of various types of energy storage devices are different, and a voltage of the energy storage device changes with power supply or charging. This affects the voltage at the two ends of the primary-side three-phase bridge arm circuit 210. Correspondingly, the secondary-side winding connection switching switch group switches the connection relationship of the three secondary-side windings in the three-phase transformer 231 in response to the voltage at the two ends of the primary-side three-phase bridge arm circuit 210, so that applicability of the power supply apparatus 120 and the charging pile 100 can be improved. For a specific running process, refer to the foregoing content. Details are not described herein.

In an embodiment, the winding switching switch module 232 shown in FIG. 5 includes a primary-side winding connection switching switch group. The primary-side winding connection switching switch group is configured to switch the connection relationship of the three primary-side windings in the three-phase transformer 231 in response to a result of comparing the voltage at the two ends of the secondary-side three-phase bridge arm circuit 240 with at least one preset value.

Specifically, in response to that the voltage at the two ends of the secondary-side three-phase bridge arm circuit 240 is greater than or equal to a first preset voltage value, a fixed end S03 and a switching end S01 of the primary-side winding connection switching switch group are connected, and the other end of each of the three primary-side windings in the three-phase transformer 231 is connected to the other end of each of the other two of the three primary-side windings. That is, a connection manner of the secondary-side windings in the three-phase transformer 231 is a star connection or a Y-shaped connection.

Specifically, in response to that the voltage at the two ends of the secondary-side three-phase bridge arm circuit 240 is less than a first preset voltage value, a fixed end S03 and a switching end S02 of the primary-side winding connection switching switch group are connected, and the three primary-side windings in the three-phase transformer 231 are sequentially connected. That is, a connection manner of the primary-side windings in the three-phase transformer 231 is a delta connection.

It may be understood that when the connection manner of the primary-side windings in the three-phase transformer 231 is a star connection or a Y-shaped connection, a maximum voltage of the primary-side winding in the three-phase transformer 231 is two-thirds of the voltage at the two ends of the primary-side three-phase bridge arm circuit 240; or when the connection manner of the primary-side windings in the three-phase transformer 231 is a delta connection, a maximum voltage of the primary-side winding in the three-phase transformer 231 is equal to the voltage at the two ends of the primary-side three-phase bridge arm circuit 240.

Correspondingly, the primary-side winding connection switching switch group may switch the connection relationship of the three primary-side windings in the three-phase transformer 231 in response to the result of comparing the voltage at the two ends of the secondary-side three-phase bridge arm circuit 240 with the at least one preset value. Details are not described.

It may be understood that the three-phase transformer circuit 230 provided in this embodiment of this application may switch the connection relationship of the three primary-side windings based on the voltage at the two ends of the secondary-side three-phase bridge arm circuit 240. In this way, the power supply apparatus 120 and the charging pile 100 can charge different types of electric vehicles 300, and the power supply apparatus 120 and the charging pile 100 can supply power to the alternating current power supply 200 or the direct current power supply by using the different types of electric vehicles 300, without generating an additional energy loss. This helps improve conversion efficiency. It may be understood that the primary-side winding connection switching switch group in the winding switching switch module 232 in each of the three-phase transformer circuit, the power supply apparatus, and the charging pile provided in this embodiment of this application may alternatively switch the connection relationship of the three primary-side windings in the three-phase transformer 231 in response to the voltage at the two ends of the primary-side three-phase bridge arm circuit 210. For a specific running process, refer to the foregoing content. Details are not described herein.

It may be understood that the winding switching switch module 232 in each of the three-phase transformer circuit, the power supply apparatus, and the charging pile provided in this embodiment of this application may alternatively include both the primary-side winding connection switching switch group shown in FIG. 4 and the secondary-side winding turn number switching switch group shown in FIG. 5.

In an embodiment, the winding switching switch module 232 shown in FIG. 6 includes a primary-side winding turn number switching switch group. The primary-side winding turn number switching switch group is configured to switch the turn numbers of the three primary-side windings in the three-phase transformer 231 in response to a result of comparing the voltage at the two ends of the secondary-side three-phase bridge arm circuit 240 with at least one preset value, so as to switch a turns ratio of the three-phase transformer 231.

Specifically, in response to that the voltage at the two ends of the secondary-side three-phase bridge arm circuit 240 is greater than or equal to a first preset voltage value, a fixed end S03 and a switching end S02 of the primary-side winding connection switching switch group are connected, and one end of each of the three primary-side windings in the three-phase transformer 231 is connected to one end of each of the other two of the three primary-side windings. That is, the turn numbers of the primary-side windings in the three-phase transformer 231 are increased.

Specifically, in response to that the voltage at the two ends of the secondary-side three-phase bridge arm circuit 240 is less than a first preset voltage value, a fixed end S03 and a switching end S01 of the primary-side winding turn number switching switch group are connected, and taps of the three primary-side windings in the three-phase transformer 231 are connected. That is, the turn numbers of the primary-side windings in the three-phase transformer 231 are decreased.

It may be understood that the primary-side winding turn number switching switch group in the winding switching switch module 232 in each of the three-phase transformer circuit, the power supply apparatus, and the charging pile provided in this embodiment of this application may alternatively switch the turn numbers of the three primary-side windings in the three-phase transformer 231 in response to the voltage at the two ends of the primary-side three-phase bridge arm circuit 210. For a specific running process, refer to the foregoing content. Details are not described herein. In an embodiment, the winding switching switch module 232 shown in FIG. 7 includes a secondary-side winding turn number switching switch group. The secondary-side winding turn number switching switch group is configured to switch the turn numbers of the three secondary-side windings in the three-phase transformer 231 in response to a result of comparing the voltage at the two ends of the secondary-side three-phase bridge arm circuit 240 with at least one preset value, so as to switch a turns ratio of the three-phase transformer 231.

Specifically, in response to that the voltage at the two ends of the secondary-side three-phase bridge arm circuit 240 is greater than or equal to a first preset voltage value, a fixed end S03 and a switching end S01 of the secondary-side winding turn number switching switch group are connected, and taps of the three secondary-side windings in the three-phase transformer 231 are connected. That is, the turn numbers of the secondary-side windings in the three-phase transformer 231 are decreased.

Specifically, in response to that the voltage at the two ends of the secondary-side three-phase bridge arm circuit 240 is less than a first preset voltage value, a fixed end S03 and a switching end S02 of the secondary-side winding connection switching switch group are connected, and one end of each of the three secondary-side windings in the three-phase transformer 231 is connected to one end of each of the other two of the three secondary-side windings. That is, the turn numbers of the primary-side windings in the three-phase transformer 231 are increased.

It may be understood that the secondary-side winding turn number switching switch group in the winding switching switch module 232 in each of the three-phase transformer circuit, the power supply apparatus, and the charging pile provided in this embodiment of this application may alternatively switch the turn numbers of the three secondary-side windings in the three-phase transformer 231 in response to the voltage at the two ends of the primary-side three-phase bridge arm circuit 210. For a specific running process, refer to the foregoing content. Details are not described herein. In this embodiment of this application, the winding switching switch module 232 may switch the turns ratio of the three-phase transformer 231 based on the voltage at the two ends of the primary-side three-phase bridge arm circuit 210 or the voltage at the two ends of the secondary-side three-phase bridge arm circuit 240. A change in the turns ratio of the three-phase transformer 231 may change a difference between a voltage of the primary-side winding and a voltage of the secondary-side winding in the three-phase transformer 231, so that the power supply apparatus 120 and the charging pile 100 can be adapted to different types of power supplies (200 or 400) or different types of electric vehicles 300.

Correspondingly, according to the three-phase transformer circuit 230 provided in this embodiment of this application, the power supply apparatus 120 and the charging pile 100 can charge different types of electric vehicles 300, and the power supply apparatus 120 and the charging pile 100 can supply power to the alternating current power supply 200 or the direct current power supply 400 by using the different types of electric vehicles 300, without generating an additional energy loss. This helps improve conversion efficiency.

In an embodiment, the winding switching switch module 232 in each of the three-phase transformer circuit 230, the power supply apparatus 120, and the charging pile 100 may alternatively include both the primary-side winding turn number switching switch group 2322 shown in FIG. 6 and the secondary-side winding turn number switching switch group 2322 shown in FIG. 7. A principle is the same as that in the foregoing embodiment. No enumerations are provided one by one.

In an embodiment, the winding switching switch module 232 in each of the three-phase transformer circuit 230, the power supply apparatus 120, and the charging pile 100 may include both the primary-side winding turn number switching switch group 2322 shown in FIG. 6 and the secondary-side winding connection switching switch group 2321 shown in FIG. 6. A principle is the same as that in the foregoing embodiment. No enumerations are provided one by one.

In an embodiment, the winding switching switch module 232 in each of the three-phase transformer circuit 230, the power supply apparatus 120, and the charging pile 100 may include both the primary-side winding connection switching switch group 2321 shown in FIG. 7 and the secondary-side winding turn number switching switch group 2322 shown in FIG. 7. A principle is the same as that in the foregoing embodiment. No enumerations are provided one by one.

In an embodiment, the winding switching switch module 232 shown in FIG. 8 includes a primary-side winding connection switching switch group 2321 and a primary-side winding turn number switching switch group 2322. The primary-side winding connection switching switch group 2321 and the primary-side winding turn number switching switch group 2322 are configured to switch at least one of the connection relationship or the turn numbers of the three primary-side windings in the three-phase transformer 231 in response to a result of comparing at least one of the voltage at the two ends of the primary-side three-phase bridge arm circuit 210 or the voltage at the two ends of the secondary-side three-phase bridge arm circuit 240 with at least one preset value.

Specifically, when the primary-side winding turn number switching switch group 2321 and the primary-side winding turn number switching switch group 2322 perform switching, the following four different topology combinations may be generated to implement separate or combined switching of the connection relationship or the turn numbers of the three primary-side windings, so as to meet a wide-range output voltage requirement of the power supply apparatus 120 or a charging pile 100:

Topology combination (1): In response to that the voltage at the two ends of the primary-side three-phase bridge arm circuit 240 is greater than or equal to a third preset voltage value, each of three primary-side winding connection switching switches S1, S2, and S3 is switched to an end 01, and each of three primary-side winding turn number switching switches S4, S5, and S6 is switched to an end 02. Correspondingly, the primary-side windings in the three-phase transformer 231 are in a star connection, secondary-side windings in the three-phase transformer 231 are in a star connection, and the turn numbers of the primary-side windings are large. For example, the third preset voltage value is 700 volts. It may be understood that when the voltage at the two ends of the primary-side three-phase bridge arm circuit 240 is greater than or equal to the third preset voltage value, an alternating current power supply 200 or a direct current power supply 400 has a high voltage. For example, the voltage is greater than 700 volts. For example, the direct current power supply 400 is an energy storage device, and the energy storage device has a high voltage when starting to supply power, or the energy storage device has a high voltage after being charged for a long time.

Topology combination (2): In response to that the voltage at the two ends of the primary-side three-phase bridge arm circuit 240 is greater than or equal to a fourth preset voltage value and is less than a third preset voltage value, each of three primary-side winding connection switching switches S1, S2, and S3 is switched to an end 01, and each of three primary-side winding turn number switching switches S4, S5, and S6 is switched to an end 01. Correspondingly, the primary-side windings in the three-phase transformer 231 are in a star connection, secondary-side windings in the three-phase transformer 231 are in a star connection, and the turn numbers of the primary-side windings are small. For example, the fourth preset voltage value is 500 volts. It may be understood that when the voltage at the two ends of the primary-side three-phase bridge arm circuit 240 is greater than or equal to the fourth preset voltage value and is less than the third preset voltage value, an alternating current power supply 200 or a direct current power supply 400 has a medium voltage. For example, the voltage ranges from 500 volts to 700 volts. For example, the direct current power supply 400 is an energy storage device, and the energy storage device has a decreased voltage after supplying power for a period of time, or the energy storage device has an increased voltage after being charged for a longer time. Topology combination (3): In response to that the voltage at the two ends of the primary-side three-phase bridge arm circuit 240 is greater than or equal to a fifth preset voltage value and is less than a fourth preset voltage value, each of three primary-side winding connection switching switches S1, S2, and S3 is switched to an end 02, and each of three primary-side winding turn number switching switches S4, S5, and S6 is switched to an end 02. Correspondingly, the primary-side windings in the three-phase transformer 231 are in a delta connection, secondary-side windings in the three-phase transformer 231 are in a star connection, and the turn numbers of the primary-side windings are large. For example, the fifth preset voltage value is 300 volts. It may be understood that when the voltage at the two ends of the primary-side three-phase bridge arm circuit 240 is greater than or equal to the fourth preset voltage value and is less than the third preset voltage value, an alternating current power supply 200 or a direct current power supply 400 has a low voltage. For example, the voltage ranges from 300 volts to 500 volts. For example, the direct current power supply 400 is an energy storage device, and the energy storage device has a further decreased voltage after supplying power for a longer time, or the energy storage device has an increased voltage after being charged for a period of time. Topology combination (4): In response to that the voltage at the two ends of the primary-side three-phase bridge arm circuit 240 is less than a fifth preset voltage value, each of three primary-side winding connection switching switches S1, S2, and S3 is switched to an end 02, and each of three primary-side winding turn number switching switches S4, S5, and S6 is switched to an end 01. Correspondingly, the primary-side windings in the three-phase transformer 231 are in a delta connection, secondary-side windings in the three-phase transformer 231 are in a star connection, and the turn numbers of the primary-side windings are small. It may be understood that when the voltage at the two ends of the primary-side three-phase bridge arm circuit 240 is less than the fifth preset voltage value, an alternating current power supply 200 or a direct current power supply 400 has an excessively low voltage. For example, the voltage is less than 300 volts. For example, the direct current power supply 400 is an energy storage device, and the energy storage device has an excessively low voltage after supplying power for a long time, or the energy storage device has an excessively low voltage when being just charged.

It may be understood that the primary-side winding connection switching switch group 2321 and the primary-side winding turn number switching switch group 2322 in the winding switching switch module 232 in each of the three-phase transformer circuit 230, the power supply apparatus 120, and the charging pile 100 provided in this embodiment of this application may alternatively switch the turn numbers and the connection relationship of the three primary-side windings in the three-phase transformer 231 in response to the voltage at the two ends of the secondary-side three-phase bridge arm circuit 240. For a specific running process, refer to the foregoing content. Details are not described herein.

In an embodiment, the winding switching switch module 232 shown in FIG. 9 includes a secondary-side winding connection switching switch group 2321 and a secondary-side winding turn number switching switch group 2322. The secondary-side winding connection switching switch group 2321 and the secondary-side winding turn number switching switch group 2322 are configured to switch at least one of the connection relationship or the turn numbers of the three secondary-side windings in the three-phase transformer 231 in response to a result of comparing at least one of the voltage at the two ends of the primary-side three-phase bridge arm circuit 240 or the voltage at the two ends of the secondary-side three-phase bridge arm circuit 240 with at least one preset value.

Specifically, when the secondary-side winding turn number switching switch group 2321 and the secondary-side winding turn number switching switch group 2322 perform switching, the following four different topology combinations may be generated to implement separate or combined switching of the connection relationship or the turn numbers of the three secondary-side windings, so as to meet a wide-range output voltage requirement of the power supply apparatus 120 or a charging pile 100:
Topology combination (1): In response to that the voltage at the two ends of the secondary-side three-phase bridge arm circuit 240 is greater than or equal to a third preset voltage value, each of three secondary-side winding connection switching switches S1, S2, and S3 is switched to an end 01, and each of three secondary-side winding turn number switching switches S4, S5, and S6 is switched to an end 02. Correspondingly, the secondary-side windings in the three-phase transformer 231 are in a star connection, primary-side windings in the three-phase transformer 231 are in a star connection, and the turn numbers of the secondary-side windings are large. For example, the third preset voltage value is 700 volts. It may be understood that when the voltage at the two ends of the secondary-side three-phase bridge arm circuit 240 is greater than or equal to the third preset voltage value, an electric vehicle has a high voltage. For example, the voltage is greater than 700 volts. For example, the electric vehicle 300 has a high voltage after being fully charged, or the electric vehicle 300 has a high voltage when starting to supply power.

Topology combination (2): In response to that the voltage at the two ends of the secondary-side three-phase bridge arm circuit 240 is greater than or equal to a fourth preset voltage value and is less than a third preset voltage value, each of three secondary-side winding connection switching switches S1, S2, and S3 is switched to an end 01, and each of three secondary-side winding turn number switching switches S4, S5, and S6 is switched to an end 01. Correspondingly, the secondary-side windings in the three-phase transformer 231 are in a star connection, primary-side windings in the three-phase transformer 231 are in a star connection, and the turn numbers of the secondary-side windings are small. For example, the fourth preset voltage value is 500 volts. It may be understood that when the voltage at the two ends of the secondary-side three-phase bridge arm circuit 240 is greater than or equal to the fourth preset voltage value and is less than the third preset voltage value, an electric vehicle has a high voltage. For example, the voltage ranges from 500 volts to 700 volts. For example, the electric vehicle 300 has a high voltage after being charged for a long time, or the electric vehicle 300 has a decreased voltage after starting to supply power.

Topology combination (3): In response to that the voltage at the two ends of the secondary-side three-phase bridge arm circuit 240 is greater than or equal to a fifth preset voltage value and is less than a fourth preset voltage value, each of three secondary-side winding connection switching switches S1, S2, and S3 is switched to an end 02, and each of three secondary-side winding turn number switching switches S4, S5, and S6 is switched to an end 02. Correspondingly, the secondary-side windings in the three-phase transformer 231 are in a delta connection, primary-side windings in the three-phase transformer 231 are in a star connection, and the turn numbers of the secondary-side windings are large. For example, the fifth preset voltage value is 300 volts. It may be understood that when the voltage at the two ends of the secondary-side three-phase bridge arm circuit 240 is greater than or equal to the fourth preset voltage value and is less than the third preset voltage value, an electric vehicle has a high voltage. For example, the voltage ranges from 300 volts to 500 volts. For example, the electric vehicle 300 has an increased voltage after starting to be charged for a period of time, or the electric vehicle 300 has a decreased voltage after supplying power for a period of time.

Topology combination (4): In response to that the voltage at the two ends of the secondary-side three-phase bridge arm circuit 240 is less than a fifth preset voltage value, each of three secondary-side winding connection switching switches S1, S2, and S3 is switched to an end 02, and each of three secondary-side winding turn number switching switches S4, S5, and S6 is switched to an end 01. Correspondingly, the secondary-side windings in the three-phase transformer 231 are in a delta connection, primary-side windings in the three-phase transformer 231 are in a star connection, and the turn numbers of the secondary-side windings are small. It may be understood that when the voltage at the two ends of the secondary-side three-phase bridge arm circuit 240 is less than the fifth preset voltage value, an electric vehicle has an excessively low voltage. For example, the voltage is less than 300 volts. For example, the electric vehicle 300 has a low voltage when starting to be charged, or the electric vehicle 300 has a further decreased voltage after supplying power for a long time.

It may be understood that the secondary-side winding turn number switching switch group 2322 and the secondary-side winding connection switching switch group 2321 in the winding switching switch module 232 in each of the three-phase transformer circuit 230, the power supply apparatus 120, and the charging pile 100 provided in this embodiment of this application may alternatively switch the turn numbers and the connection relationship of the three secondary-side windings in the three-phase transformer 231 in response to the voltage at the two ends of the primary-side three-phase bridge arm circuit 210. For a specific running process, refer to the foregoing content. Details are not described herein.

It may be understood that the winding switching switch module 232 in each of the three-phase transformer circuit 230, the power supply apparatus 120, and the charging pile 100 provided in this embodiment of this application may alternatively include all of the primary-side winding connection switching switch group 2321 and the primary-side winding turn number switching switch group 2322 shown in FIG. 8, and the secondary-side winding connection switching switch group 2321 and the secondary-side winding turn number switching switch group 2322 shown in FIG. 9. A principle is the same as that in the foregoing embodiment. No enumerations are provided one by one.

It may be understood that the winding switching switch module 232 in each of the three-phase transformer circuit, the power supply apparatus, and the charging pile provided in this embodiment of this application may alternatively include all of the primary-side winding switching switch module 232 shown in FIG. 5, and the secondary-side winding connection switching switch group 2321 and the secondary-side winding turn number switching switch group 2322 shown in FIG. 9. A principle is the same as that in the foregoing embodiment. No enumerations are provided one by one.

It may be understood that the winding switching switch module 232 in each of the three-phase transformer circuit, the power supply apparatus, and the charging pile provided in this embodiment of this application may alternatively include all of the primary-side winding connection switching module 2321 shown in FIG. 7, and the secondary-side winding connection switching switch group 2321 and the secondary-side winding turn number switching switch group 2322 shown in FIG. 9. A principle is the same as that in the foregoing embodiment. No enumerations are provided one by one.

It may be understood that the winding switching switch module 232 in each of the three-phase transformer circuit 230, the power supply apparatus 120, and the charging pile 100 provided in this embodiment of this application may alternatively include all of the primary-side winding connection switching switch group 2321 and the primary-side winding turn number switching switch group 2322 shown in FIG. 8, and the secondary-side winding turn number switching module 2322 shown in FIG. 7. A principle is the same as that in the foregoing embodiment. No enumerations are provided one by one.

It may be understood that the winding switching switch module 232 in each of the three-phase transformer circuit 230, the power supply apparatus 120, and the charging pile 100 provided in this embodiment of this application may alternatively include all of the primary-side winding connection switching switch group 2321 and the primary-side winding turn number switching switch group 2322 shown in FIG. 8, and the secondary-side winding connection switching module 2321 shown in FIG. 6. A principle is the same as that in the foregoing embodiment. No enumerations are provided one by one.

In embodiments of this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" usually indicates an "or" relationship between associated objects. "At least one of the following" or a similar expression thereof means any combination of these items, including a single item or any combination of a plurality of items. For example, at least one of a, b, and c may represent a, b, c, a and b, a and c, b and c, or a, b, and c, where a, b, and c may be singular or plural.

A person of ordinary skill in the art may be aware that the units, algorithms, and steps described in embodiments disclosed in this specification can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

In the several embodiments provided in this application, when any function is implemented in a form of a software functional unit and sold or used as an independent product, the function may be stored in a computer-readable storage medium. Based on such an understanding, the technical solutions in this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The storage medium includes any medium that can store program code, for example, a USB flash drive, a removable hard disk drive, a read-only memory (Read-Only Memory, ROM for short below), a random access memory (Random Access Memory, RAM for short below), a magnetic disk, or an optical disc.

The foregoing descriptions are merely specific implementations of this application. The protection scope of this application shall be subject to the protection scope of the claims.

## Claims

1. A power supply apparatus (120), wherein the power supply apparatus (120) comprises a three-phase transformer (123) and a winding switching switch module (1232), the three-phase transformer (123) comprises three primary-side windings (N11, N21, and N31) and three secondary-side windings (N12, N22, and N32), each of the three primary-side windings (N11, N21, and N31) is configured to be connected to a primary-side three-phase bridge arm circuit (121), each of the three secondary-side windings (N12, N22, and N32) is configured to be connected to a secondary-side three-phase bridge arm circuit (124), the winding switching switch module (1232) comprises a winding connection switching switch group and a winding turn number switching switch group, and the winding switching switch module (1232) is configured to switch a turns ratio or a connection manner of the three-phase transformer (123);
the winding connection switching switch group is configured to switch a connection manner of the three primary-side windings (N11, N21, and N31) and/or a connection manner of the three secondary-side windings (N12, N22, and N32), wherein the connection manner of the three primary-side windings (N11, N21, and N31) or the connection manner of the three secondary-side windings (N12, N22, and N32) comprises a sequential connection or a one-end interconnection; and
the winding turn number switching switch group is configured to switch turn numbers of the three primary-side windings (N11, N21, and N31) or turn numbers of the three secondary-side windings (N12, N22, and N32), wherein each of the three primary-side windings (N11, N21, and N31) or the three secondary-side windings (N12, N22, and N32) comprises a tap,
wherein the winding switching switch module (1232) is configured to:
switch at least one of the turns ratio or the connection manner of the three-phase transformer (123) based on at least one of a voltage at two ends of the primary-side three-phase bridge arm circuit (121) or a voltage at two ends of the secondary-side three-phase bridge arm circuit (124).

2. The power supply apparatus (120) according to claim 1, wherein one end of the three-phase primary-side winding is configured to be connected to each of three bridge arm midpoints of the primary-side three-phase bridge arm circuit (121), one end of the three-phase secondary-side winding is configured to be connected to each of three bridge arm midpoints of the secondary-side three-phase bridge arm circuit (124), and the winding connection switching switch group comprises at least one of a primary-side winding connection switching switch group or a secondary-side winding connection switching switch;
the primary-side winding connection switching switch group is configured to connect the other end of each of the three primary-side windings (N11, N21, and N31) and a common end of the three primary-side windings (N11, N21, and N31), or to sequentially connect the three primary-side windings (N11, N21, and N31) through the other end of each of the three primary-side windings (N11, N21, and N31); and
the secondary-side winding connection switching switch group is configured to connect the other end of each of the three secondary-side windings (N12, N22, and N32) and a common end of the three secondary-side windings (N12, N22, and N32), or to sequentially connect the three secondary-side windings (N12, N22, and N32) through the other end of each of the three secondary-side windings (N12, N22, and N32).

3. The power supply apparatus (120) according to claim 2, wherein each of the primary-side winding connection switching switch group and the secondary-side winding connection switching switch group comprises three winding connection switching switches, each winding connection switching switch comprises a fixed end and two switching ends, the fixed end of each of the three winding connection switching switches is configured to be connected to the other end of each of the three primary-side windings (N11, N21, and N31) or the other end of each of the three secondary-side windings (N12, N22, and N32), one switching end of each of the three winding connection switching switches is configured to connect to one switching end of each of the other two of the three winding connection switching switches, to form the common end of the three primary-side windings (N11, N21, and N31) or the common end of the three secondary-side windings (N12, N22, and N32), and the other switching end of each of the three winding connection switching switches is configured to be connected to one end of each of the three primary-side windings (N11, N21, and N31) or one end of each of the three secondary-side windings (N12, N22, and N32).

4. The power supply apparatus (120) according to claim 1, wherein one end of each of the three primary-side windings (N11, N21, and N31) is configured to be connected to each of three bridge arm midpoints of the primary-side three-phase bridge arm circuit (121), one end of each of the three secondary-side windings (N12, N22, and N32) is configured to be connected to each of three bridge arm midpoints of the secondary-side three-phase bridge arm circuit (124), and the winding turn number switching switch group comprises at least one of a primary-side winding turn number switching switch group or a secondary-side winding turn number switching switch group;
the primary-side winding turn number switching switch group is configured to connect the other end of each of the three primary-side windings (N11, N21, and N31) or the tap of each of the three primary-side windings (N11, N21, and N31) and a common end of the three primary-side windings (N11, N21, and N31), or to sequentially connect the three primary-side windings (N11, N21, and N31) through the other end of each of the three primary-side windings (N11, N21, and N31) or the tap of each of the three primary-side windings (N11, N21, and N31); and
the secondary-side winding turn number switching switch group is configured to connect the other end of each of the three secondary-side windings (N12, N22, and N32) or the tap of each of the three secondary-side windings (N12, N22, and N32) and a common end of the three secondary-side windings (N12, N22, and N32), or to sequentially connect the three secondary-side windings (N12, N22, and N32) through the other end of each of the three secondary-side windings (N12, N22, and N32) or the tap of each of the three secondary-side windings (N12, N22, and N32).

5. The power supply apparatus (120) according to claim 4, wherein at least one of the primary-side winding turn number switching switch group or the secondary-side winding turn number switching switch group comprises three winding turn number switching switches, each winding turn number switching switch comprises a fixed end and two switching ends, fixed ends of the three winding turn number switching switches are configured to be connected, to form the common end of the three primary-side windings (N11, N21, and N31), one switching end of each of the three winding turn number switching switches is configured to be connected to the other end of each of the three primary-side windings (N11, N21, and N31) or the other end of each of the three secondary-side windings (N12, N22, and N32), and the other switching end of each of the three winding turn number switching switches is configured to be connected to the tap of each of the three primary-side windings (N11, N21, and N31) or the tap of each of the three secondary-side windings (N12, N22, and N32).

6. The power supply apparatus (120) according to claim 1, wherein the winding switching switch module (1232) comprises at least one of a primary-side winding switching switch module or a secondary-side winding switching switch module,
the primary-side winding switching switch module is configured to connect the other end of each of the three primary-side windings (N11, N21, and N31) or the tap of each of the three primary-side windings (N11, N21, and N31) and a common end of the three primary-side windings (N11, N21, and N31), or to sequentially connect the three primary-side windings (N11, N21, and N31) through the other end of each of the three primary-side windings (N11, N21, and N31) or the tap of each of the three primary-side windings (N11, N21, and N31); and
the secondary-side winding switching switch module is configured to connect the other end of each of the three secondary-side windings (N12, N22, and N32) or the tap of each of the three secondary-side windings (N12, N22, and N32) and a common end of the three secondary-side windings (N12, N22, and N32), or to sequentially connect the three secondary-side windings (N12, N22, and N32) through the other end of each of the three secondary-side windings (N12, N22, and N32) or the tap of each of the three secondary-side windings (N12, N22, and N32).

7. The power supply apparatus (120) according to claim 6, wherein the primary-side winding switching switch module or the secondary-side winding switching switch module comprises three winding connection switching switches and three winding turn number switching switches, each winding connection switching switch comprises a fixed end and two switching ends, each winding turn number switching switch comprises a fixed end and two switching ends, and the fixed end of each winding connection switching switch is configured to be connected to the fixed end of each winding turn number switching switch;
one switching end of each of the three winding connection switching switches is configured to be connected to one switching end of each of the other two of the three winding connection switching switches, to form the common end of the three primary-side windings (N11, N21, and N31), and the other switching end of each of the three winding connection switching switches is configured to be connected to one end of each of the three primary-side windings (N11, N21, and N31); or one switching end of each of the three winding connection switching switches is configured to be connected to one switching end of each of the other two of the three winding connection switching switches, to form the common end of the three secondary-side windings (N12, N22, and N32), and the other switching end of each of the three winding connection switching switches is configured to be connected to one end of each of the three secondary-side windings (N12, N22, and N32); and
one switching end of each of the three winding turn number switching switches is configured to be connected to the other end of each of the three primary-side windings (N11, N21, and N31), and the other switching end of each of the three winding turn number switching switches is configured to be connected to the tap of each of the three primary-side windings (N11, N21, and N31); or one switching end of each of the three winding turn number switching switches is configured to be connected to the other end of each of the three secondary-side windings (N12, N22, and N32), and the other switching end of each of the three winding turn number switching switches is configured to be connected to the tap of each of the three secondary-side windings (N12, N22, and N32).

8. The power supply apparatus (120) according to claim 1, wherein the winding switching switch module (1232) is configured to:
switch at least one of the turn numbers or the connection manner of the three secondary-side windings (N12, N22, and N32) in response to a result of comparing the voltage at the two ends of the secondary-side three-phase bridge arm circuit (124) with at least one preset value.

9. The power supply apparatus (120) according to claim 8, wherein the winding switching switch module (1232) is configured to:
in response to that the voltage at the two ends of the secondary-side three-phase bridge arm circuit (124) is greater than or equal to a first preset value, connect the other end of each of the three secondary-side windings (N12, N22, and N32) and a common end of the three secondary-side windings (N12, N22, and N32); or
in response to that the voltage at the two ends of the secondary-side three-phase bridge arm circuit (124) is less than the first preset value, sequentially connect the three secondary-side windings (N12, N22, and N32) through the other end of each of the three secondary-side windings (N12, N22, and N32).

10. The power supply apparatus (120) according to claim 8, wherein the winding switching switch module (1232) is configured to:
in response to that the voltage at the two ends of the secondary-side three-phase bridge arm circuit (124) is greater than or equal to a second preset value, connect the other end of each of the three secondary-side windings (N12, N22, and N32) and a common end of the three secondary-side windings (N12, N22, and N32); or
in response to that the voltage at the two ends of the secondary-side three-phase bridge arm circuit (124) is less than the second preset value, sequentially connect the three secondary-side windings (N12, N22, and N32) through the tap of each of the three secondary-side windings (N12, N22, and N32).

11. The power supply apparatus (120) according to claim 8, wherein the winding switching switch module (1232) is configured to:
in response to that the voltage at the two ends of the secondary-side three-phase bridge arm circuit (124) is greater than or equal to a third preset voltage value, connect the other end of each of the three secondary-side windings (N12, N22, and N32) and a common end of the three secondary-side windings (N12, N22, and N32);
in response to that the voltage at the two ends of the secondary-side three-phase bridge arm circuit (124) is less than a fourth preset voltage value and is greater than or equal to a third preset voltage value, connect the tap of each of the three secondary-side windings (N12, N22, and N32) and a common end of the three secondary-side windings (N12, N22, and N32);
in response to that the voltage at the two ends of the secondary-side three-phase bridge arm circuit (124) is less than a third preset voltage value and is greater than or equal to a fifth preset voltage value, sequentially connect the three secondary-side windings (N12, N22, and N32) through the tap of each of the three secondary-side windings (N12, N22, and N32); or
in response to that the voltage at the two ends of the secondary-side three-phase bridge arm circuit (124) is less than a fifth preset voltage value, sequentially connect the three secondary-side windings (N12, N22, and N32) through the other end of each of the three secondary-side windings (N12, N22, and N32).

12. The power supply apparatus (120) according to claim 8, wherein the winding switching switch module (1232) is configured to:
switch at least one of the turn numbers or the connection manner of the three secondary-side windings (N12, N22, and N32) in response to a result of comparing the voltage at the two ends of the primary-side three-phase bridge arm circuit (121) with at least one preset value.

13. A charging pile (100), wherein the charging pile (100) is configured to charge an electric vehicle (300) or receive power supplied by an electric vehicle (300), and the charging pile (100) comprises a previous-stage circuit (110) and a power supply apparatus (120);
the previous-stage circuit (110) is configured to provide a direct current to the power supply apparatus (120), or is configured to receive power supplied by the power supply apparatus (120); and
the power supply apparatus (120) is configured to: receive a direct current, and charge the electric vehicle (300), or is configured to: receive power supplied by the electric vehicle (300), and output a direct current to the previous-stage circuit (110), and the power supply apparatus (120) is described according to claims 1 to 12.

## Patentansprüche

1. Stromversorgungsvorrichtung (120), wobei die Stromversorgungsvorrichtung (120) einen dreiphasigen Transformator (123) und ein Wicklungsumschaltschaltermodul (1232) umfasst, der dreiphasige Transformator (123) drei primärseitige Wicklungen (N11, N21 und N31) und drei sekundärseitige Wicklungen (N12, N22 und N32) umfasst, jede der drei primärseitigen Wicklungen (N11, N21 und N31) dazu konfiguriert ist, mit einer primärseitigen dreiphasigen Brückenzweigschaltung (121) verbunden zu werden, jede der drei sekundärseitigen Wicklungen (N12, N22 und N32) dazu konfiguriert ist, mit einer sekundärseitigen dreiphasigen Brückenzweigschaltung (124) verbunden zu werden, das Wicklungsumschaltschaltermodul (1232) eine Wicklungsverbindungsumschaltschaltergruppe und eine Wicklungswindungszahlumschaltschaltergruppe umfasst und das Wicklungsumschaltschaltermodul (1232) dazu konfiguriert ist, ein Windungsverhältnis oder eine Verbindungsart des dreiphasigen Transformators (123) umzuschalten;
die Wicklungsverbindungsumschaltschaltergruppe dazu konfiguriert ist, eine Verbindungsart der drei primärseitigen Wicklungen (N11, N21 und N31) und/oder
eine Verbindungsart der drei sekundärseitigen Wicklungen (N12, N22 und N32) umzuschalten, wobei die Verbindungsart der drei primärseitigen Wicklungen (N11, N21 und N31) oder die Verbindungsart der drei sekundärseitigen Wicklungen (N12, N22 und N32) eine Reihenverbindung oder eine Verbindung mit einem Ende umfasst; und
die Wicklungswindungszahlumschaltschaltergruppe dazu konfiguriert ist, die Windungszahlen der drei primärseitigen Wicklungen (N11, N21 und N31) oder die Windungszahlen der drei sekundärseitigen Wicklungen (N12, N22 und N32) umzuschalten, wobei jede der drei primärseitigen Wicklungen (N11, N21 und N31) oder der drei sekundärseitigen Wicklungen (N12, N22 und N32) einen Abgriff umfasst,
wobei das Wicklungsumschaltschaltermodul (1232) zu Folgendem konfiguriert ist:
Umschalten von mindestens einem des Windungsverhältnisses oder der Verbindungsart des dreiphasigen Transformators (123) basierend auf mindestens einer von einer Spannung an zwei Enden der primärseitigen dreiphasigen Brückenzweigschaltung (121) oder einer Spannung an zwei Enden der sekundärseitigen dreiphasigen Brückenzweigschaltung (124).

2. Stromversorgungsvorrichtung (120) nach Anspruch 1, wobei ein Ende der dreiphasigen primärseitigen Wicklung dazu konfiguriert ist, mit jedem von drei Brückenzweigmittelpunkten der primärseitigen dreiphasigen Brückenzweigschaltung (121) verbunden zu werden, ein Ende der dreiphasigen sekundärseitigen Wicklung dazu konfiguriert ist, mit jedem von drei Brückenzweigmittelpunkten der sekundärseitigen dreiphasigen Brückenzweigschaltung (124) verbunden zu werden, und die Wicklungsverbindungsumschaltschaltergruppe mindestens eines von einer primärseitigen Wicklungsverbindungsumschaltschaltergruppe oder einem sekundärseitigen Wicklungsverbindungsumschaltschalter umfasst;
die primärseitige Wicklungsverbindungsumschaltschaltergruppe dazu konfiguriert ist, das andere Ende von jeder der drei primärseitigen Wicklungen (N11, N21 und N31) und ein gemeinsames Ende der drei primärseitigen Wicklungen (N11, N21 und N31) zu verbinden oder die drei primärseitigen Wicklungen (N11, N21 und N31) in Reihe über das andere Ende von jeder der drei primärseitigen Wicklungen (N11, N21 und N31) zu verbinden; und
die sekundärseitige Wicklungsverbindungsumschaltschaltergruppe dazu konfiguriert ist, das andere Ende von jeder der drei sekundärseitigen Wicklungen (N12, N22 und N32) und ein gemeinsames Ende der drei sekundärseitigen Wicklungen (N12, N22 und N32) zu verbinden oder die drei sekundärseitigen Wicklungen (N12, N22 und N32) in Reihe über das andere Ende von jeder der drei sekundärseitigen Wicklungen (N12, N22 und N32) zu verbinden.

3. Stromversorgungsvorrichtung (120) nach Anspruch 2, wobei jede der primärseitigen Wicklungsverbindungsumschaltschaltergruppe und der sekundärseitigen Wicklungsverbindungsumschaltschaltergruppe drei Wicklungsverbindungsumschaltschalter umfasst, jeder Wicklungsverbindungsumschaltschalter ein fixes Ende und zwei Umschaltenden umfasst, das fixe Ende von jedem der drei Wicklungsverbindungsumschaltschalter dazu konfiguriert ist, mit dem anderen Ende von jeder der drei primärseitigen Wicklungen (N11, N21 und N31) oder dem anderen Ende von jeder der drei sekundärseitigen Wicklungen (N12, N22 und N32) verbunden zu werden, ein Umschaltende von jedem der drei Wicklungsverbindungsumschaltschalter dazu konfiguriert ist, mit einem Umschaltende von jedem der anderen zwei der drei Wicklungsverbindungsumschaltschalter verbunden zu werden, um das gemeinsame Ende der drei primärseitigen Wicklungen (N11, N21 und N31) oder das gemeinsame Ende der drei sekundärseitigen Wicklungen (N12, N22 und N32) zu bilden, und das andere Umschaltende von jeder der drei Wicklungsverbindungsumschaltschalter dazu konfiguriert ist, mit einem Ende von jeder der drei primärseitigen Wicklungen (N11, N21 und N31) oder einem Ende von jeder drei sekundärseitigen Wicklungen (N12, N22 und N32) verbunden zu werden.

4. Stromversorgungsvorrichtung (120) nach Anspruch 1, wobei ein Ende von jeder der drei primärseitigen Wicklungen (N11, N21 und N31) dazu konfiguriert ist, mit jedem von drei Brückenzweigmittelpunkten der primärseitigen dreiphasigen Brückenzweigschaltung (121) verbunden zu werden, ein Ende von jeder der drei sekundärseitigen Wicklungen (N12, N22 und N32) dazu konfiguriert ist, mit jedem von drei Brückenzweigmittelpunkten der sekundärseitigen dreiphasigen Brückenzweigschaltung (124) verbunden zu werden, und die Wicklungswindungszahlumschaltschaltergruppe mindestens eine von einer primärseitigen Wicklungswindungszahlumschaltschaltergruppe oder einer sekundärseitigen Wicklungswindungszahlumschaltschaltergruppe umfasst;
die primärseitige Wicklungswindungszahlumschaltschaltergruppe dazu konfiguriert ist, das andere Ende von jeder der drei primärseitigen Wicklungen (N11, N21 und N31) oder den Abgriff von jeder der drei primärseitigen Wicklungen (N11, N21 und N31) und ein gemeinsames Ende der drei primärseitigen Wicklungen (N11, N21 und N31) zu verbinden oder die drei primärseitigen Wicklungen (N11, N21 und N31) in Reihe über das andere Ende von jeder der drei primärseitigen Wicklungen (N11, N21 und N31) oder den Abgriff von jeder der drei primärseitigen Wicklungen (N11, N21 und N31) zu verbinden; und
die sekundärseitige Wicklungswindungszahlumschaltschaltergruppe dazu konfiguriert ist, das andere Ende von jeder der drei sekundärseitigen Wicklungen (N12, N22 und N32) oder den Abgriff von jeder der drei sekundärseitigen Wicklungen (N12, N22 und N32) und ein gemeinsames Ende der drei sekundärseitigen Wicklungen (N12, N22 und N32) zu verbinden oder die drei sekundärseitigen Wicklungen (N12, N22 und N32) in Reihe über das andere Ende von jeder der drei sekundärseitigen Wicklungen (N12, N22 und N32) oder den Abgriff von jeder der drei sekundärseitigen Wicklungen (N12, N22 und N32) zu verbinden.

5. Stromversorgungsvorrichtung (120) nach Anspruch 4, wobei mindestens eine der primärseitigen Wicklungswindungszahlumschaltschaltergruppe oder der sekundärseitigen Wicklungswindungszahlumschaltschaltergruppe drei Wicklungswindungszahlumschaltschalter umfasst, jeder Wicklungswindungszahlumschaltschalter ein fixes Ende und zwei Umschaltenden umfasst, die fixen Enden der drei Wicklungswindungszahlumschaltschalter dazu konfiguriert sind, verbunden zu werden, um das gemeinsame Ende der drei primärseitigen Wicklungen (N11, N21 und N31) zu bilden, ein Umschaltende von jedem der drei Wicklungswindungszahlumschaltschalter dazu konfiguriert ist, mit dem anderen Ende von jeder der drei primärseitigen Wicklungen (N11, N21 und N31) oder dem anderen Ende von jeder der drei sekundärseitigen Wicklungen (N12, N22 und N32) verbunden zu werden, und das andere Umschaltende von jedem der drei Wicklungswindungszahlumschaltschalter dazu konfiguriert ist, mit dem Abgriff von jeder der drei primärseitigen Wicklungen (N11, N21 und N31) oder dem Abgriff von jeder der drei sekundärseitigen Wicklungen (N12, N22 und N32) verbunden zu werden.

6. Stromversorgungsvorrichtung (120) nach Anspruch 1, wobei das Wicklungsumschaltschaltermodul (1232) mindestens eines von einem primärseitigen Wicklungsumschaltschaltermodul oder einem sekundärseitigen Wicklungsumschaltschaltermodul umfasst;
das primärseitige Wicklungsumschaltschaltermodul dazu konfiguriert ist, das andere Ende von jeder der drei primärseitigen Wicklungen (N11, N21 und N31) oder den Abgriff von jeder der drei primärseitigen Wicklungen (N11, N21 und N31) und ein gemeinsames Ende der drei primärseitigen Wicklungen (N11, N21 und N31) zu verbinden oder die drei primärseitigen Wicklungen (N11, N21 und N31) in Reihe über das andere Ende von jeder der drei primärseitigen Wicklungen (N11, N21 und N31) oder den Abgriff von jeder der drei primärseitigen Wicklungen (N11, N21 und N31) zu verbinden; und
das sekundärseitige Wicklungsumschaltschaltermodul dazu konfiguriert ist, das andere Ende von jeder der drei sekundärseitigen Wicklungen (N12, N22 und N32) oder den Abgriff von jeder der drei sekundärseitigen Wicklungen (N12, N22 und N32) und ein gemeinsames Ende der drei sekundärseitigen Wicklungen (N12, N22 und N32) zu verbinden oder die drei sekundärseitigen Wicklungen (N12, N22 und N32) in Reihe über das andere Ende von jeder der drei sekundärseitigen Wicklungen (N12, N22 und N32) oder den Abgriff von jeder der drei sekundärseitigen Wicklungen (N12, N22 und N32) zu verbinden.

7. Stromversorgungsvorrichtung (120) nach Anspruch 6, wobei das primärseitige Wicklungsumschaltschaltermodul oder das sekundärseitige Wicklungsumschaltschaltermodul drei Wicklungsverbindungsumschaltschalter und drei Wicklungswindungszahlumschaltschalter umfasst, jeder Wicklungsverbindungsumschaltschalter ein fixes Ende und zwei Umschaltenden umfasst, jeder Wicklungswindungszahlumschaltschalter ein fixes Ende und zwei Umschaltenden umfasst und das fixe Ende von jedem Wicklungsverbindungsumschaltschalter dazu konfiguriert ist, mit dem fixen Ende von jedem Wicklungswindungszahlumschaltschalter verbunden zu werden;
ein Umschaltende von jedem der drei Wicklungsverbindungsumschaltschalter dazu konfiguriert ist, mit einem Umschaltende von jedem der anderen zwei der drei Wicklungsverbindungsumschaltschalter verbunden zu werden, um das gemeinsame Ende der drei primärseitigen Wicklungen (N11, N21 und N31) zu bilden, und das andere Umschaltende von jedem der drei Wicklungsverbindungsumschaltschalter dazu konfiguriert ist, mit einem Ende von jeder der drei primärseitigen Wicklungen (N11, N21 und N31) verbunden zu werden; oder ein Umschaltende von jedem der drei Wicklungsverbindungsumschaltschalter dazu konfiguriert ist, mit einem Umschaltende von jedem der anderen zwei der drei Wicklungsverbindungsumschaltschalter verbunden zu werden, um das gemeinsame Ende der drei sekundärseitigen Wicklungen (N12, N22 und N32) zu bilden, und das andere Umschaltende von jedem der drei Wicklungsverbindungsumschaltschalter dazu konfiguriert ist, mit einem Ende von jeder der drei sekundärseitigen Wicklungen (N12, N22 und N32) verbunden zu werden; und
ein Umschaltende von jedem der drei Wicklungswindungszahlumschaltschalter dazu konfiguriert ist, mit dem anderen Ende von jeder der drei primärseitigen Wicklungen (N11, N21 und N31) verbunden zu werden, und das andere Umschaltende von jedem der drei Wicklungswindungszahlumschaltschalter dazu konfiguriert ist, mit dem Abgriff von jeder der drei primärseitigen Wicklungen (N11, N21 und N31) verbunden zu werden; oder ein Umschaltende von jedem der drei Wicklungswindungszahlumschaltschalter dazu konfiguriert ist, mit dem anderen Ende von jeder der drei sekundärseitigen Wicklungen (N12, N22 und N32) verbunden zu werden, und das andere Umschaltende von jedem der drei Wicklungswindungszahlumschaltschalter dazu konfiguriert ist, mit dem Abgriff von jeder der drei sekundärseitigen Wicklungen (N12, N22 und N32) verbunden zu werden.

8. Stromversorgungsvorrichtung (120) nach Anspruch 1, wobei das Wicklungsumschaltschaltermodul (1232) zu Folgendem konfiguriert ist:
Umschalten von mindestens einer der Windungszahlen oder der Verbindungsart der drei sekundärseitigen Wicklungen (N12, N22 und N32) als Reaktion auf ein Ergebnis des Vergleichens der Spannung an den zwei Enden der sekundärseitigen dreiphasigen Brückenzweigschaltung (124) mit mindestens einem voreingestellten Wert.

9. Stromversorgungsvorrichtung (120) nach Anspruch 8, wobei das Wicklungsumschaltschaltermodul (1232) zu Folgendem konfiguriert ist:
als Reaktion darauf, dass die Spannung an den zwei Enden der sekundärseitigen dreiphasigen Brückenzweigschaltung (124) größer als oder gleich einem ersten voreingestellten Wert ist, Verbinden des anderen Endes von jeder der drei sekundärseitigen Wicklungen (N12, N22 und N32) und eines gemeinsamen Endes der drei sekundärseitigen Wicklungen (N12, N22 und N32); oder
als Reaktion darauf, dass die Spannung an den zwei Enden der sekundärseitigen dreiphasigen Brückenzweigschaltung (124) kleiner als der erste voreingestellte Wert ist, Verbinden der drei sekundärseitigen Wicklungen (N12, N22 und N32) in Reihe über das andere Ende von jeder der drei sekundärseitigen Wicklungen (N12, N22 und N32).

10. Stromversorgungsvorrichtung (120) nach Anspruch 8, wobei das Wicklungsumschaltschaltermodul (1232) zu Folgendem konfiguriert ist:
als Reaktion darauf, dass die Spannung an den zwei Enden der sekundärseitigen dreiphasigen Brückenzweigschaltung (124) größer als oder gleich einem zweiten voreingestellten Wert ist, Verbinden des anderen Endes von jeder der drei sekundärseitigen Wicklungen (N12, N22 und N32) und eines gemeinsamen Endes der drei sekundärseitigen Wicklungen (N12, N22 und N32); oder
als Reaktion darauf, dass die Spannung an den zwei Enden der sekundärseitigen dreiphasigen Brückenzweigschaltung (124) kleiner als der zweite voreingestellte Wert ist, Verbinden der drei sekundärseitigen Wicklungen (N12, N22 und N32) in Reihe über den Abgriff von jeder der drei sekundärseitigen Wicklungen (N12, N22 und N32).

11. Stromversorgungsvorrichtung (120) nach Anspruch 8, wobei das Wicklungsumschaltschaltermodul (1232) zu Folgendem konfiguriert ist:
als Reaktion darauf, dass die Spannung an den zwei Enden der sekundärseitigen dreiphasigen Brückenzweigschaltung (124) größer als oder gleich einem zweiten voreingestellten Spannungswert ist, Verbinden des anderen Endes von jeder der drei sekundärseitigen Wicklungen (N12, N22 und N32) und eines gemeinsamen Endes der drei sekundärseitigen Wicklungen (N12, N22 und N32);
als Reaktion darauf, dass die Spannung an den zwei Enden der sekundärseitigen dreiphasigen Brückenzweigschaltung (124) kleiner als ein vierter voreingestellter Spannungswert und größer als oder gleich einem dritten voreingestellten Wert ist, Verbinden des Abgriffs von jeder der drei sekundärseitigen Wicklungen (N12, N22 und N32) und eines gemeinsamen Endes der drei sekundärseitigen Wicklungen (N12, N22 und N32);
als Reaktion darauf, dass die Spannung an den zwei Enden der sekundärseitigen dreiphasigen Brückenzweigschaltung (124) kleiner als ein dritter voreingestellter Spannungswert und größer als oder gleich einem fünften voreingestellten Wert ist, Verbinden der drei sekundärseitigen Wicklungen (N12, N22 und N32) in Reihe durch den Abgriff von jeder der drei sekundärseitigen Wicklungen (N12, N22 und N32); oder
als Reaktion darauf, dass die Spannung an den zwei Enden der sekundärseitigen dreiphasigen Brückenzweigschaltung (124) kleiner als ein fünfter voreingestellter Spannungswert ist, Verbinden der drei sekundärseitigen Wicklungen (N12, N22 und N32) in Reihe über das andere Ende von jeder der drei sekundärseitigen Wicklungen (N12, N22 und N32).

12. Stromversorgungsvorrichtung (120) nach Anspruch 8, wobei das Wicklungsumschaltschaltermodul (1232) zu Folgendem konfiguriert ist:
Umschalten von mindestens einer der Windungszahlen oder der Verbindungsart der drei sekundärseitigen Wicklungen (N12, N22 und N32) als Reaktion auf ein Ergebnis des Vergleichens der Spannung an den zwei Enden der primärseitigen dreiphasigen Brückenzweigschaltung (121) mit mindestens einem voreingestellten Wert.

13. Ladesäule (100), wobei die Ladesäule (100) dazu konfiguriert ist, ein Elektrofahrzeug (300) aufzuladen oder von einem Elektrofahrzeug (300) gelieferten Strom aufzunehmen, und die Ladesäule (100) eine Vorstufenschaltung (110) und eine Stromversorgungsvorrichtung (120) umfasst;
die Vorstufenschaltung (110) dazu konfiguriert ist, der Stromversorgungsvorrichtung (120) Gleichstrom bereitzustellen, oder dazu konfiguriert ist, von der Stromversorgungsvorrichtung (120) gelieferten Strom aufzunehmen; und
die Stromversorgungsvorrichtung (120) zu Folgendem konfiguriert ist: Aufnehmen eines Gleichstroms und Aufladen des Elektrofahrzeugs (300), oder zu Folgendem konfiguriert ist: Aufnehmen von durch das Elektrofahrzeug (300) gelieferten Strom und Ausgeben eines Gleichstroms an die Vorstufenschaltung (110) und die gemäß den Ansprüchen 1 bis 12 beschriebene Stromversorgungsvorrichtung (120).

## Revendications

1. Appareil d'alimentation électrique (120), dans lequel l'appareil d'alimentation électrique (120) comprend un transformateur triphasé (123) et un module de commutateurs de commutation d'enroulement (1232), le transformateur triphasé (123) comprend trois enroulements côté primaire (N11, N21 et N31) et trois enroulements côté secondaire (N12, N22 et N32), chacun des trois enroulements côté primaire (N11, N21 et N31) est configuré pour être connecté à un circuit de bras de pont triphasé côté primaire (121), chacun des trois enroulements côté secondaire (N12, N22 et N32) est configuré pour être connecté à un circuit de bras de pont triphasé côté secondaire (124), le module de commutateurs de commutation d'enroulement (1232) comprend un groupe de commutateurs de commutation de connexion d'enroulement et un groupe de commutateurs de commutation du nombre de tours d'enroulement, et le module de commutateurs de commutation d'enroulement (1232) est configuré pour commuter un rapport de tours ou un mode de connexion du transformateur triphasé (123) ;
le groupe de commutateurs de commutation de connexion d'enroulement est configuré pour commuter un mode de connexion des trois enroulements côté primaire (N11, N21 et N31) et/ou
un mode de connexion des trois enroulements côté secondaire (N12, N22 et N32), dans lequel le mode de connexion des trois enroulements côté primaire (N11, N21 et N31) ou le mode de connexion des trois enroulements côté secondaire (N12, N22 et N32) comprend une connexion séquentielle ou une interconnexion à une extrémité ; et
le groupe de commutateurs de commutation du nombre de tours d'enroulement est configuré pour commuter les nombres de tours des trois enroulements côté primaire (N11, N21 et N31) ou les nombres de tours des trois enroulements côté secondaire (N12, N22 et N32), dans lequel chacun des trois enroulements côté primaire (N11, N21 et N31) ou des trois enroulements côté secondaire (N12, N22 et N32) comprend une prise,
dans lequel le module de commutateurs de commutation d'enroulement (1232) est configuré pour :
commuter au moins l'un du rapport de tours ou du mode de connexion du transformateur triphasé (123) sur la base d'au moins l'une d'une tension aux deux extrémités du circuit de bras de pont triphasé côté primaire (121) ou d'une tension aux deux extrémités du circuit de bras de pont triphasé côté secondaire (124).

2. Appareil d'alimentation électrique (120) selon la revendication 1, dans lequel une extrémité de l'enroulement triphasé côté primaire est configurée pour être connectée à chacun des trois points médians des bras de pont du circuit de bras de pont triphasé côté primaire (121), une extrémité de l'enroulement triphasé côté secondaire est configurée pour être connectée à chacun des trois points médians des bras de pont du circuit de bras de pont triphasé côté secondaire (124), et le groupe de commutateurs de commutation de connexion d'enroulement comprend au moins l'un d'un groupe de commutateurs de commutation de connexion d'enroulement côté primaire ou d'un groupe de commutateurs de commutation de connexion d'enroulement côté secondaire ;
le groupe de commutateurs de commutation de connexion d'enroulement côté primaire est configuré pour connecter l'autre extrémité de chacun des trois enroulements côté primaire (N11, N21 et N31) et une extrémité commune des trois enroulements côté primaire (N11, N21 et N31), ou pour connecter séquentiellement les trois enroulements côté primaire (N11, N21 et N31) par le biais de l'autre extrémité de chacun des trois enroulements côté primaire (N11, N21 et N31) ; et
le groupe de commutateurs de commutation de connexion d'enroulement côté secondaire est configuré pour connecter l'autre extrémité de chacun des trois enroulements côté secondaire (N12, N22 et N32) et une extrémité commune des trois enroulements côté secondaire (N12, N22 et N32), ou pour connecter séquentiellement les trois enroulements côté secondaire (N12, N22 et N32) par le biais de l'autre extrémité de chacun des trois enroulements côté secondaire (N12, N22 et N32).

3. Appareil d'alimentation électrique (120) selon la revendication 2, dans lequel chacun du groupe de commutateurs de commutation de connexion d'enroulement côté primaire et du groupe de commutateurs de commutation de connexion d'enroulement côté secondaire comprend trois commutateurs de commutation de connexion d'enroulement, chaque commutateur de commutation de connexion d'enroulement comprend une extrémité fixe et deux extrémités de commutation, l'extrémité fixe de chacun des trois commutateurs de commutation de connexion d'enroulement est configurée pour être connectée à l'autre extrémité de chacun des trois enroulements côté primaire (N11, N21 et N31) ou à l'autre extrémité de chacun des trois enroulements côté secondaire (N12, N22 et N32), une extrémité de commutation de chacun des trois commutateurs de commutation de connexion d'enroulement est configurée pour être connectée à une extrémité de commutation de chacun des deux autres des trois commutateurs de commutation de connexion d'enroulement, pour former l'extrémité commune des trois enroulements côté primaire (N11, N21 et N31) ou l'extrémité commune des trois enroulements côté secondaire (N12, N22 et N32), et l'autre extrémité de commutation de chacun des trois commutateurs de commutation de connexion d'enroulement est configurée pour être connectée à une extrémité de chacun des trois enroulements côté primaire (N11, N21 et N31) ou à une extrémité de chacun des trois enroulements côté secondaire (N12, N22 et N32).

4. Appareil d'alimentation électrique (120) selon la revendication 1, dans lequel une extrémité de chacun des trois enroulements côté primaire (N11, N21 et N31) est configurée pour être connectée à chacun des trois points médians des bras de pont du circuit de bras de pont triphasé côté primaire (121), une extrémité de chacun des trois enroulements côté secondaire (N12, N22 et N32) est configurée pour être connectée à chacun des trois points médians des bras de pont du circuit de bras de pont triphasé côté secondaire (124), et le groupe de commutateurs de commutation du nombre de tours d'enroulement comprend au moins l'un d'un groupe de commutateurs de commutation du nombre de tours d'enroulement côté primaire ou d'un groupe de commutateurs de commutation du nombre de tours d'enroulement côté secondaire ;
le groupe de commutateurs de commutation du nombre de tours d'enroulement côté primaire est configuré pour connecter l'autre extrémité de chacun des trois enroulements côté primaire (N11, N21 et N31) ou la prise de chacun des trois enroulements côté primaire (N11, N21 et N31) et une extrémité commune des trois enroulements côté primaire (N11, N21 et N31), ou pour connecter séquentiellement les trois enroulements côté primaire (N11, N21 et N31) par le biais de l'autre extrémité de chacun des trois enroulements côté primaire (N11, N21 et N31) ou la prise de chacun des trois enroulements côté primaire (N11, N21 et N31) ; et
le groupe de commutateurs de commutation du nombre de tours d'enroulement côté secondaire est configuré pour connecter l'autre extrémité de chacun des trois enroulements côté secondaire (N12, N22 et N32) ou la prise de chacun des trois enroulements côté secondaire (N12, N22 et N32) et une extrémité commune des trois enroulements côté secondaire (N12, N22 et N32), ou pour connecter séquentiellement les trois enroulements côté secondaire (N12, N22 et N32) par le biais de l'autre extrémité de chacun des trois enroulements côté secondaire (N12, N22 et N32) ou la prise de chacun des trois enroulements côté secondaire (N12, N22 et N32).

5. Appareil d'alimentation électrique (120) selon la revendication 4, dans lequel au moins l'un du groupe de commutateurs de commutation du nombre de tours d'enroulement côté primaire ou du groupe de commutateurs de commutation du nombre de tours d'enroulement côté secondaire comprend trois commutateurs de commutation du nombre de tours d'enroulement, chaque commutateur de commutation du nombre de tours d'enroulement comprend une extrémité fixe et deux extrémités de commutation, les extrémités fixes des trois commutateurs de commutation du nombre de tours d'enroulement sont configurées pour être connectées afin de former l'extrémité commune des trois enroulements côté primaire (N11, N21 et N31), une extrémité de commutation de chacun des trois commutateurs de commutation du nombre de tours d'enroulement est configurée pour être connectée à l'autre extrémité de chacun des trois enroulements côté primaire (N11, N21 et N31) ou à l'autre extrémité de chacun des trois enroulements côté secondaire (N12, N22 et N32), et l'autre extrémité de commutation de chacun des trois commutateurs de commutation du nombre de tours d'enroulement est configurée pour être connectée à la prise de chacun des trois enroulements côté primaire (N11, N21 et N31) ou à la prise de chacun des trois enroulements côté secondaire (N12, N22 et N32).

6. Appareil d'alimentation électrique (120) selon la revendication 1, dans lequel le module de commutateurs de commutation d'enroulement (1232) comprend au moins l'un d'un module de commutateurs de commutation d'enroulement côté primaire ou d'un module de commutateurs de commutation d'enroulement côté secondaire ;
le module de commutateurs de commutation d'enroulement côté primaire est configuré pour connecter l'autre extrémité de chacun des trois enroulements côté primaire (N11, N21 et N31) ou la prise de chacun des trois enroulements côté primaire (N11, N21 et N31) et une extrémité commune des trois enroulements côté primaire (N11, N21 et N31), ou pour connecter séquentiellement les trois enroulements côté primaire (N11, N21 et N31) par le biais de l'autre extrémité de chacun des trois enroulements côté primaire (N11, N21 et N31) ou la prise de chacun des trois enroulements côté primaire (N11, N21 et N31) ; et
le module de commutateurs de commutation d'enroulement côté secondaire est configuré pour connecter l'autre extrémité de chacun des trois enroulements côté secondaire (N12, N22 et N32) ou la prise de chacun des trois enroulements côté secondaire (N12, N22 et N32) et une extrémité commune des trois enroulements côté secondaire (N12, N22 et N32), ou pour connecter séquentiellement les trois enroulements côté secondaire (N12, N22 et N32) par le biais de l'autre extrémité de chacun des trois enroulements côté secondaire (N12, N22 et N32) ou la prise de chacun des trois enroulements côté secondaire (N12, N22 et N32).

7. Appareil d'alimentation électrique (120) selon la revendication 6, dans lequel le module de commutateurs de commutation d'enroulement côté primaire ou le module de commutateurs de commutation d'enroulement côté secondaire comprend trois commutateurs de commutation de connexion d'enroulement et trois commutateurs de commutation du nombre de tours d'enroulement, chaque commutateur de commutation de connexion d'enroulement comprend une extrémité fixe et deux extrémités de commutation, chaque commutateur de commutation du nombre de tours d'enroulement comprend une extrémité fixe et deux extrémités de commutation, et l'extrémité fixe de chaque commutateur de commutation de connexion d'enroulement est configurée pour être connectée à l'extrémité fixe de chaque commutateur de commutation du nombre de tours d'enroulement ;
une extrémité de commutation de chacun des trois commutateurs de commutation de connexion d'enroulement est configurée pour être connectée à une extrémité de commutation de chacun des deux autres des trois commutateurs de commutation de connexion d'enroulement, pour former l'extrémité commune des trois enroulements côté primaire (N11, N21 et N31), et l'autre extrémité de commutation de chacun des trois commutateurs de commutation de connexion d'enroulement est configurée pour être connectée à une extrémité de chacun des trois enroulements côté primaire (N11, N21 et N31) ;
ou une extrémité de commutation de chacun des trois commutateurs de commutation de connexion d'enroulement est configurée pour être connectée à une extrémité de commutation de chacun des deux autres des trois commutateurs de commutation de connexion d'enroulement, pour former l'extrémité commune des trois enroulements côté secondaire (N12, N22 et N32), et l'autre extrémité de commutation de chacun des trois commutateurs de commutation de connexion d'enroulement est configurée pour être connectée à une extrémité de chacun des trois enroulements côté secondaire (N12, N22 et N32) ; et
un extrémité de commutation de chacun des trois commutateurs de commutation du nombre de tours d'enroulement est configurée pour être connectée à l'autre extrémité de chacun des trois enroulements côté primaire (N11, N21 et N31), et l'autre extrémité de commutation de chacun des trois commutateurs de commutation du nombre de tours d'enroulement est configurée pour être connectée à la prise de chacun des trois enroulements côté primaire (N11, N21 et N31) ; ou une extrémité de commutation de chacun des trois commutateurs de commutation du nombre de tours d'enroulement est configurée pour être connectée à l'autre extrémité de chacun des trois enroulements côté secondaire (N12, N22 et N32), et l'autre extrémité de commutation de chacun des trois commutateurs de commutation du nombre de tours d'enroulement est configurée pour être connectée à la prise de chacun des trois enroulements côté secondaire (N12, N22 et N32).

8. Appareil d'alimentation électrique (120) selon la revendication 1, dans lequel le module de commutateurs de commutation d'enroulement (1232) est configuré pour :
commuter au moins l'un des nombres de tours ou du mode de connexion des trois enroulements côté secondaire (N12, N22 et N32) en réponse à un résultat de comparaison de la tension aux deux extrémités du circuit de bras de pont triphasé côté secondaire (124) avec au moins une valeur prédéfinie.

9. Appareil d'alimentation électrique (120) selon la revendication 8, dans lequel le module de commutateurs de commutation d'enroulement (1232) est configuré pour :
en réponse au fait que la tension aux deux extrémités du circuit de bras de pont triphasé côté secondaire (124) est supérieure ou égale à une première valeur prédéfinie, connecter l'autre extrémité de chacun des trois enroulements côté secondaire (N12, N22 et N32) et une extrémité commune des trois enroulements côté secondaire (N12, N22 et N32) ; ou
en réponse au fait que la tension aux deux extrémités du circuit de bras de pont triphasé côté secondaire (124) est inférieure à la première valeur prédéfinie, connecter séquentiellement les trois enroulements côté secondaire (N12, N22 et N32) par le biais de l'autre extrémité de chacun des trois enroulements côté secondaire (N12, N22 et N32).

10. Appareil d'alimentation électrique (120) selon la revendication 8, dans lequel le module de commutateurs de commutation d'enroulement (1232) est configuré pour :
en réponse au fait que la tension aux deux extrémités du circuit de bras de pont triphasé côté secondaire (124) est supérieure ou égale à une deuxième valeur prédéfinie, connecter l'autre extrémité de chacun des trois enroulements côté secondaire (N12, N22 et N32) et une extrémité commune des trois enroulements côté secondaire (N12, N22 et N32) ; ou
en réponse au fait que la tension aux deux extrémités du circuit de bras de pont triphasé côté secondaire (124) est inférieure à la deuxième valeur prédéfinie, connecter séquentiellement les trois enroulements côté secondaire (N12, N22 et N32) par le biais de la prise de chacun des trois enroulements côté secondaire (N12, N22 et N32).

11. Appareil d'alimentation électrique (120) selon la revendication 8, dans lequel le module de commutateurs de commutation d'enroulement (1232) est configuré pour :
en réponse au fait que la tension aux deux extrémités du circuit de bras de pont triphasé côté secondaire (124) est supérieure ou égale à une troisième valeur de tension prédéfinie, connecter l'autre extrémité de chacun des trois enroulements côté secondaire (N12, N22 et N32) et une extrémité commune des trois enroulements côté secondaire (N12, N22 et N32) ;
en réponse au fait que la tension aux deux extrémités du circuit de bras de pont triphasé côté secondaire (124) est inférieure à une quatrième valeur de tension prédéfinie et est supérieure ou égale à une troisième valeur de tension prédéfinie, connecter la prise de chacun des trois enroulements côté secondaire (N12, N22 et N32) et une extrémité commune des trois enroulements côté secondaire (N12, N22 et N32) ;
en réponse au fait que la tension aux deux extrémités du circuit de bras de pont triphasé côté secondaire (124) est inférieure à une troisième valeur de tension prédéfinie et est supérieure ou égale à une cinquième valeur de tension prédéfinie, connecter séquentiellement les trois enroulements côté secondaire (N12, N22 et N32) par le biais de la prise de chacun des trois enroulements côté secondaire (N12, N22 et N32) ; ou
en réponse au fait que la tension aux deux extrémités du circuit de bras de pont triphasé côté secondaire (124) est inférieure à une cinquième valeur de tension prédéfinie, connecter séquentiellement les trois enroulements côté secondaire (N12, N22 et N32) par le biais de l'autre extrémité de chacun des trois enroulements côté secondaire (N12, N22 et N32).

12. Appareil d'alimentation électrique (120) selon la revendication 8, dans lequel le module de commutateurs de commutation d'enroulement (1232) est configuré pour :
commuter au moins l'un des nombres de tours ou du mode de connexion des trois enroulements côté secondaire (N12, N22 et N32) en réponse à un résultat de comparaison de la tension aux deux extrémités du circuit de bras de pont triphasé côté primaire (121) avec au moins une valeur prédéfinie.

13. Pile de charge (100), dans laquelle la pile de charge (100) est configurée pour charger un véhicule électrique (300) ou recevoir de l'énergie fournie par un véhicule électrique (300), et la pile de charge (100) comprend un circuit d'étage précédent (110) et un appareil d'alimentation électrique (120) ;
le circuit d'étage précédent (110) est configuré pour fournir un courant continu à l'appareil d'alimentation électrique (120), ou est configuré pour recevoir l'énergie fournie par l'appareil d'alimentation électrique (120) ; et
l'appareil d'alimentation électrique (120) est configuré pour : recevoir un courant continu et charger le véhicule électrique (300), ou est configuré pour : recevoir l'énergie fournie par le véhicule électrique (300), et délivrer un courant continu au circuit d'étage précédent (110), et l'appareil d'alimentation électrique (120) est décrit selon les revendications 1 à 12.
